# EUROPEAN PATENT APPLICATION

(11) **EP 4 755 567 A1**
(43) Date of publication of application: **10.06.2026**
(21) Application number: 24851815.1
(22) Date of filing: 05.08.2024
(51) Int. Cl.: B23K 26/21, B23K 26/32, B23K 26/60, B23K 26/073

(54) **LASER WELDING METHOD, LASER WELDING SYSTEM, AND METAL BONDED BODY**

(30) Priority: 04.08.2023 JP 2023128087; 04.08.2023 JP 2023128088
(71) Applicant: FURUKAWA ELECTRIC CO., LTD., Chiyoda-ku, Tokyo 100-8322 (JP); NICHIA CORPORATION, Tokushima 774-8601 (JP)
(72) Inventor: SAKAI, Toshiaki, Tokyo 100-8322 (JP); KAGEYAMA, Hiroto, Tokyo 100-8322 (JP); MATSUMOTO, Ryoya, Tokyo 100-8322 (JP); SHIGEMATSU, Takashi, Tokyo 100-8322 (JP); YAMAMOTO, Keita, Anan-shi, Tokushima 774-8601 (JP); KONDO, Hideki, Anan-shi, Tokushima 774-8601 (JP); MORI, Naoki, Anan-shi, Tokushima 774-8601 (JP)
(74) Representative: SSM Sandmair
(86) International application number: PCT/JP2024/027961
(87) International publication number: WO 2025/033391

(57) **Abstract**

In a laser welding method, for example, in a first step, a first member and a second member having a convex curved surface convex toward the first member are brought relatively close to each other, a plurality of metal foils are compressed in a state of being interposed between the first member and the convex curved surface in a layering direction, and a compressed portion curved in a state of protruding in a first direction along the curved surface is thereby formed in the plurality of metal foils such that at least a metal foil positioned at an end portion of the compressed portion in the first direction is plastically deformed partially. In a second step after the first step, a portion of the plurality of metal foils including the compressed portion and a metal material are joined together in a state where the end portion of the compressed portion in the first direction and the metal material are in contact with each other.

## Description

### Field

The present invention relates to a laser welding method, a laser welding system, and a metal joint. Background

An electricity storage device including a part, which has a metal material and a plurality of metal foils joined together by laser welding, for example, has been known conventionally (for example, Patent Literature 1).

### Citation List

### Patent Literature

Patent Literature 1: Japanese Unexamined Patent Application Publication No. 2020-004643

### Summary

### Technical Problem

In laser welding for joining a metal material and a plurality of metal foils together, because the metal foils are thin and tend to stretch or tear when irradiated with laser light, setting conditions for the laser welding may be difficult.

Furthermore, a tensile force may act on a metal joint laser-welded in a state where a metal material and a plurality of metal foils have been layered over each other, such that the metal material and the plurality of metal foils are pulled in directions opposite to each other and intersecting the layering direction. There is sometimes a demand for a metal joint to have specified fracture strength for the metal joint to withstand such a tensile force (hereinafter, this fracture strength will be referred to as tensile shear strength).

Therefore, one of objects of the present invention is to provide a laser welding method, a laser welding system, and a metal joint that are novel and have been improved to enable, for example, in a case where a metal material and a plurality of metal foils are joined together by laser welding, a metal foil to be prevented from stretching or tearing and a metal joint higher in tensile shear strength to be manufactured.

### Solution to Problem

A laser welding method according to the present invention is, for example, a laser welding method of welding a metal material and a plurality of metal foils together by irradiation with laser light, the laser welding method including: a first step of compressing, in a layering direction, the plurality of metal foils that have been layered; and a second step of joining the metal material and the plurality of metal foils together by irradiating the plurality of metal foils or the metal material with laser light and forming a welded portion that penetrates the plurality of metal foils in the layering direction and is present within the metal material. In the first step, a first member and a second member that has a convex curved surface convex toward the first member are brought relatively close to each other, the plurality of metal foils are compressed in a state of being interposed between the first member and the convex curved surface in the layering direction, and a compressed portion curved in a state of protruding in a first direction approximately along the convex curved surface is thereby formed in the plurality of metal foils such that at least a metal foil positioned at an end portion of the compressed portion in the first direction is plastically deformed partially, and in the second step, a portion of the plurality of metal foils including the compressed portion and the metal material are joined together in a state where the end portion of the compressed portion in the first direction and the metal material are in contact with each other.

According to the laser welding method, in the first step, metal foils adjacent to each other in the layering direction may be partially joined with each other in at least either the end portion of the compressed portion in the first direction or an end portion of the compressed portion in a direction opposite to the first direction.

According to the laser welding method, in the first step, each metal foil included in the plurality of metal foils and an adjacent metal foil in the layering direction may be partially joined with each other in the compressed portion.

According to the laser welding method, in the first step, the plurality of metal foils may be integrated together.

According to the laser welding method, in the first step, metal foils adjacent to each other in the layering direction at any position in the layering direction may be partially joined with each other in the compressed portion by room-temperature joining.

According to the laser welding method, the first step and the second step may be performed at different locations.

According to the laser welding method, the second member may have a Young's modulus higher than a Young's modulus of the metal material.

According to the laser welding method, in the first step, the compressed portion may be formed to have a thickness in the layering direction, the thickness being 40% or more and 60% or less with respect to a thickness of the plurality of metal foils in the layering direction in a state where the plurality of metal foils have been layered without being compressed.

According to the laser welding method, the convex curved surface may be formed into a columnar surface extending in a third direction approximately orthogonal to a protruding direction of the convex curved surface.

According to the laser welding method, the convex curved surface may be formed into a columnar surface having a predetermined width in a fourth direction approximately orthogonal to both the protruding direction and the third direction, the columnar surface extending to be longer in the third direction than the predetermined width.

According to the laser welding method, the convex curved surface may be a cylindrical surface.

According to the laser welding method, the convex curved surface may be an outer peripheral surface of a roller that rolls about a rotation axis extending in the third direction, and in the first step, the plurality of metal foils may be compressed while rolling the roller.

According to the laser welding method, in the first step, a portion of the plurality of metal foils at a different position from the compressed portion may be restricted from moving in a direction away from the first member by a restriction portion positioned on an opposite side of the first member with respect to the plurality of metal foils.

According to the laser welding method, in the second step, the metal material and the plurality of metal foils may be held in the layering direction at a position away from the compressed portion by a support mechanism.

According to the laser welding method, in the second step, the support mechanism may hold the metal material and the plurality of metal foils in the layering direction in a state where a surface pressure lower than a surface pressure acting on the compressed portion in the first step is acting on the plurality of metal foils.

According to the laser welding method, in the second step, a surface of a metal foil positioned at an end portion of the plurality of metal foils may be irradiated with the laser light, the end portion of the plurality of metal foils being on a side opposite to a side where the metal material is.

According to the laser welding method, in the second step, the metal material may be irradiated with the laser light.

According to the laser welding method, the welded portion may include a plurality of beads extending in a second direction intersecting the layering direction, the plurality of beads being provided at intervals in a fifth direction intersecting both the layering direction and the second direction.

According to the laser welding method, the plurality of beads extending in the second direction may be approximately along directions in which tensile forces are the largest among directions intersecting the layering direction, the tensile forces acting on a metal joint by the metal material being pulled in one of directions intersecting the layering direction and the plurality of metal foils being pulled in the other one of the directions intersecting the layering direction, the metal joint having the metal material and the plurality of metal foils joined by the welded portion.

According to the laser welding method, the plurality of beads may be provided to be away from each other in the fifth direction at a boundary between the plurality of metal foils and the metal material in the layering direction.

According to the laser welding method, at the boundary, each of the intervals may be 1.5 times a width of each of the beads in the fifth direction or longer.

According to the laser welding method, the plurality of beads may be formed so that end portions of the plurality of beads in the second direction are away from each other in the fifth direction.

According to the laser welding method, the plurality of beads may be provided to extend across the compressed portion and a non-compressed portion in the plurality of metal foils.

According to the laser welding method, the boundary may have a first boundary and a second boundary away from the first boundary in a direction intersecting the layering direction, and the plurality of beads may be provided to extend across the first boundary and the second boundary.

According to the laser welding method, the metal material and the plurality of metal foils may be made of an aluminum-based material.

According to the laser welding method, the metal material and the plurality of metal foils may be made of a copper-based material.

According to the laser welding method, the second step may include: a third step of forming a first welded portion having the compressed portion and the metal material welded together by irradiation with the laser light; and a fourth step of melting and solidifying, by irradiation with the laser light, either a portion adjacent to a gap between the first welded portion and the metal foils or a connection between the first welded portion and the metal foils, after the third step.

According to the laser welding method, in the fourth step, the laser light may include first laser light and second laser light shorter in wavelength than the first laser light.

According to the laser welding method, in the fourth step, the irradiation with the laser light may include a plurality of irradiation instances to melt and solidify different portions respectively.

According to the laser welding method, in the fourth step, the irradiation with the laser light may include a plurality of irradiation instances to melt and solidify portions of the metal foils at different positions in the layering direction respectively.

According to the laser welding method, in the fourth step, the irradiation with the laser light may include a plurality of irradiation instances in which different positions on the metal foils are irradiated with the laser light.

According to the laser welding method, in the fourth step, the irradiation with the laser light may include a plurality of irradiation instances at different power levels of the laser light.

According to the laser welding method, an amount of energy per irradiation instance with the laser light in the fourth step may be less than an amount of energy of the laser light used in irradiation in the third step.

According to the laser welding method, in the fourth step, the laser light may be scanned over the metal foils.

According to the laser welding method, in the third step, the laser light may be scanned over the metal foils, and the fourth step may include scanning the laser light at a scanning speed faster than a scanning speed of the laser light in the third step.

According to the laser welding method, in the fourth step, laser light may be irradiated in a direction inclined with respect to an irradiation direction of the laser light in the third step.

A laser welding method according to the present invention is, for example, a laser welding method including irradiating one metal material of a first metal material and a second metal material superimposing on each other in a sixth direction with laser light, forming a welded portion that penetrates the one metal material in the sixth direction and is present within the other metal material of the first metal material and the second metal material, and thereby joining the first metal material and the second metal material together. The welded portion includes a plurality of beads extending in a second direction intersecting the sixth direction, the plurality of beads being provided at intervals in a fifth direction intersecting both the sixth direction and the second direction, and the plurality of beads extending in the second direction are approximately along directions in which tensile forces are the largest among directions intersecting the sixth direction, the tensile forces acting on a metal joint by the first metal material being pulled in one of the directions intersecting the sixth direction and the second metal material being pulled in the other one of the directions intersecting the sixth direction, the metal joint having the first metal material and the second metal material joined by the welded portion.

A laser welding system according to the present invention is, for example, a laser welding system to weld a metal material and a plurality of metal foils together by irradiation with laser light, the laser welding system including: a compression apparatus configured to compress, in a layering direction, the plurality of metal foils that have been layered; and a joining apparatus configured to join the metal material and the plurality of metal foils together by irradiating the plurality of metal foils or the metal material with laser light and forming a welded portion that penetrates the plurality of metal foils in the layering direction and is present within the metal material. The compression apparatus is configured to: brings a first member and a second member that has a convex curved surface convex toward the first member relatively close to each other; compress the plurality of metal foils in a state where the plurality of metal foils are interposed between the first member and the convex curved surface in the layering direction; and thereby form, in the plurality of metal foils, a compressed portion that is curved in a state of protruding in a first direction along the convex curved surface, such that at least a metal foil positioned at an end portion of the compressed portion in the first direction is plastically deformed partially, and the joining apparatus is configured to join the plurality of metal foils and the metal material together in a state where the end portion of the compressed portion in the first direction and the metal material are in contact with each other.

According to the laser welding system, the welded portion may include a plurality of beads extending in a second direction intersecting the layering direction, the plurality of beads being provided at intervals in a fifth direction intersecting both the layering direction and the second direction.

A metal joint according to the present invention is, for example, a metal joint including: a plurality of metal foils that have been layered; a metal material in contact with a metal foil positioned at one end of the plurality of metal foils in a layering direction; and a welded portion that penetrates the plurality of metal foils in the layering direction, is present within the metal material, and joins the plurality of metal foils and the metal material together. The plurality of metal foils include a compressed portion that has been compressed in a state of being curved to be convex toward the metal material, and at least the metal foil in contact with the metal material is plastically deformed partially in the compressed portion.

According to the metal joint, the welded portion may include a plurality of beads extending in a second direction intersecting the layering direction, the plurality of beads being provided at intervals in a fifth direction intersecting both the layering direction and the second direction.

### Advantageous Effects of Invention

The present invention enables obtainment of a laser welding method, a laser welding system, and a metal joint that are novel and have been improved.

### Brief Description of Drawings

FIG. 1 is a diagram of an exemplary schematic configuration of a joining apparatus of a first embodiment.
FIG. 2 is an exemplary and schematic cross-sectional view of a battery including a metal joint that is a workpiece for the joining apparatus of the first embodiment.
FIG. 3 is a graph illustrating optical absorptance of metals in relation to wavelength of laser light for irradiation.
FIG. 4 is an exemplary and schematic plan view illustrating a spot of laser light formed on a surface of the workpiece by the joining apparatus of the first embodiment.
FIG. 5 is a diagram of an exemplary configuration of a laser welding system of the first embodiment.
FIG. 6 is an exemplary flowchart illustrating a procedure of a laser welding method of the first embodiment.
FIG. 7 is an exemplary and schematic side view for description of a first step of the laser welding method of the first embodiment.
FIG. 8 is an exemplary and schematic side view for description of a second step of the laser welding method of the first embodiment.
FIG. 9 is a schematic plan view illustrating an example of a metal joint formed by the laser welding method of the first embodiment.
FIG. 10 is a schematic plan view illustrating an example (first modified example) of the metal joint formed by the laser welding method of the first embodiment.
FIG. 11 is a schematic plan view illustrating an example (second modified example) of the metal joint formed by the laser welding method of the first embodiment.
FIG. 12 is an exemplary and schematic side view for description of another approach (third modified example) to the first step of the laser welding method of the first embodiment.
FIG. 13 is an exemplary and schematic side view for description of another approach (fourth modified example) to the second step of the laser welding method of the first embodiment.
FIG. 14 is an exemplary flowchart illustrating another example of a procedure of a laser welding method of a second embodiment.
FIG. 15 is an exemplary and schematic cross-sectional view of a workpiece at an intermediate stage during a fourth step of the laser welding method of the second embodiment.
FIG. 16 is an exemplary and schematic cross-sectional view of the workpiece at a stage where the fourth step of the laser welding method of the second embodiment has ended.
FIG. 17 is an exemplary and schematic cross-sectional view of a workpiece at an intermediate stage during a fourth step of a laser welding method of a modified example (fifth modified example) where an irradiation direction of laser light in the second embodiment has been changed.
FIG. 18 is an exemplary and schematic plan view of a metal joint formed by a laser welding method of a reference example.
FIG. 19 is a schematic plan view illustrating an example of a metal joint formed by a laser welding method of a third embodiment.
FIG. 20 is a schematic plan view illustrating an example of the metal joint formed by the laser welding method of the third embodiment.
FIG. 21 is a schematic plan view illustrating an example (sixth modified example) of the metal joint formed by the laser welding method of the third embodiment.
FIG. 22 is an exemplary and schematic cross-sectional view of part of the metal joint illustrated in FIG. 21.
FIG. 23 is a schematic plan view illustrating part of an example (seventh modified example) of the metal joint formed by the laser welding method of the third embodiment.
FIG. 24 is a schematic plan view illustrating an example (eighth modified example) of the metal joint formed by the laser welding method of the third embodiment.
FIG. 25 is a schematic plan view illustrating an example (ninth modified example) of the metal joint formed by the laser welding method of the third embodiment.
FIG. 26 is a schematic plan view illustrating an example (tenth modified example) of the metal joint formed by the laser welding method of the third embodiment. Description of Embodiments

Exemplary embodiments of the present invention and modified examples thereof will be disclosed hereinafter. Configurations of the embodiments and modified examples described hereinafter and functions and effects brought about by these configurations are just examples. The present invention may be implemented by configurations other than those disclosed by way of the following embodiments and modified examples. Furthermore, the present invention achieves at least one of various effects (including derivative effects) obtained by the configurations.

Furthermore, the following embodiments and modified examples have similar configurations. The embodiments and modified examples achieve similar functions and effects based on the similar configurations. The same reference sign will hereinafter be assigned to similar components included in the embodiments and modified examples, and redundant description thereof may be omitted.

In each drawing, a direction X is represented by an arrow X, a direction Y is represented by an arrow Y, and a direction Z is represented by an arrow Z. The direction X, the direction Y, and the direction Z intersect one another and are approximately orthogonal to one another. The direction Z is approximately vertically upward, and the direction X and the direction Y are approximately horizontal. For simplification, illustration of each individual metal foils 12 is omitted in in the drawings.

Furthermore, in this specification, ordinal numbers are assigned for convenience to distinguish among steps, members, portions, laser light beams, and times, for example, and do not limit priority or order.

### First Embodiment

### Configuration of Joining Apparatus

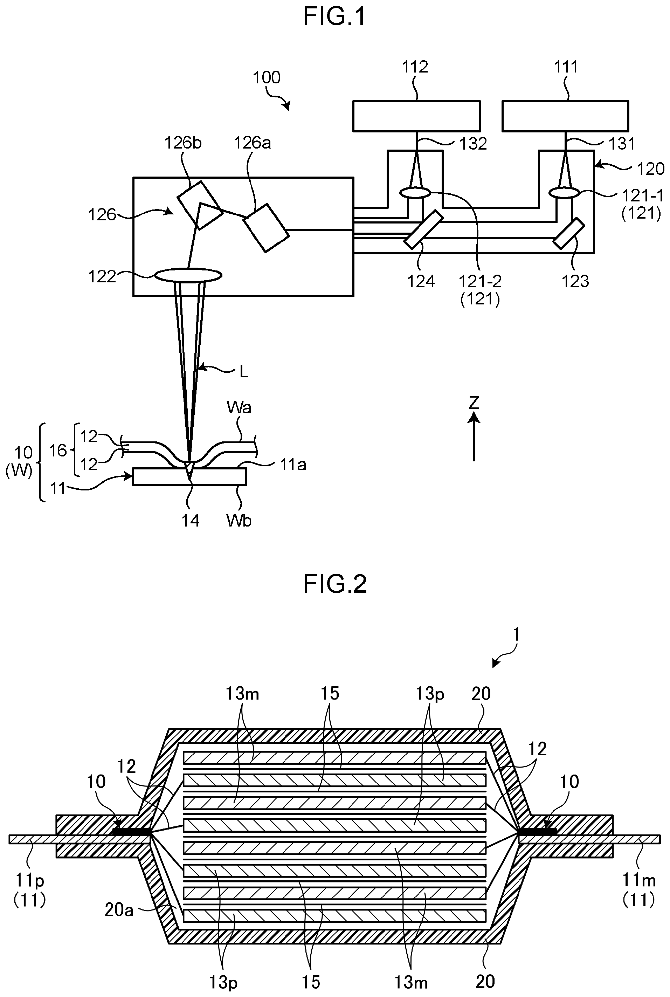

FIG. 1 is a diagram of a schematic configuration of a joining apparatus 100 of an embodiment. As illustrated in FIG. 1, the joining apparatus 100 includes a laser device 111, a laser device 112, an optical head 120, and optical fibers 131 and 132. The joining apparatus 100 enables a workpiece W to be laser-welded by irradiation with laser light L. The joining apparatus 100 is also referred to as a laser welding apparatus.

Each of the laser devices 111 and 112 has a laser oscillator and is configured to be capable of outputting laser light having power of, for example, several kilowatts. Each of the laser devices 111 and 112 outputs laser light having a wavelength of 400 nm or more and 1200 nm or less. The laser devices 111 and 112 have therein, for example, laser light sources, such as a fiber laser, a semiconductor laser (element), a YAG laser, and/or a disc laser. Furthermore, the laser devices 111 and 112 may be configured to be capable of outputting, as the total output from a plurality of light sources, multimode laser light having power of several kilowatts. The laser device 111 outputs first laser light, and the laser device 112 outputs second laser light.

The optical fibers 131 and 132 optically connect the laser devices 111 and 112 and the optical head 120 to each other. In other words, the optical fibers 131 and 132 respectively guide laser light output from the laser devices 111 and 112 to the optical head 120.

The optical head 120 is an optical device for irradiating the workpiece W with laser light input from the laser devices 111 and 112. The optical head 120 has collimator lenses 121, a condenser lens 122, a mirror 123, a filter 124, and a galvanometer scanner 126. The collimator lenses 121, the condenser lens 122, the mirror 123, the filter 124, and the galvanometer scanner 126 are also referred to as optical components. Furthermore, the galvanometer scanner 126 may also be referred to as a laser scanner.

The collimator lenses 121 (121-1 and 121-2) respectively collimate laser light input via the optical fibers 131 and 132. The laser light that is collimated becomes collimated light.

The mirror 123 reflects the first laser light that has become collimated light at the collimator lens 121-1, toward the galvanometer scanner 126.

The filter 124 is a high-pass filter that transmits the first laser light and reflects the second laser light without transmitting the second laser light. The first laser light from the mirror 123 passes through the filter 124 and is directed toward the galvanometer scanner 126. The second laser light from the collimator lens 121-2 on the other hand is reflected by the filter 124 and is directed toward the galvanometer scanner 126.

The galvanometer scanner 126 has a plurality of mirrors 126a and 126b. Changing angles of the plurality of mirrors 126a and 126b switches the output direction of laser light L from the optical head 120 and thereby enables a position to be changed, the position being on a surface Wa of the workpiece W and being where the workpiece W is irradiated with the laser light L. Each of the angles of the mirrors 126a and 126b is changed by, for example, a motor controlled by a control device. By changing the output direction of the laser light L while outputting the laser light L, the optical head 120 is able to scan the laser light L over the surface Wa of the workpiece W. The galvanometer scanner 126 is an example of a laser scanner. The optical head 120 may have a laser scanner different from the galvanometer scanner 126.

The condenser lens 122 condenses laser light that is collimated light output by the galvanometer scanner 126 and outputs the condensed laser light as the laser light L (output light) to the workpiece W. The laser light L output from the optical head 120 includes the first laser light and the second laser light.

The workpiece W includes a metal material 11 and a layered body 16 having metal foils 12 placed on the metal material 11. The metal material 11 is, for example, a plate member that extends in a direction intersecting the direction Z at a portion to be welded and a portion around the portion to be welded. Furthermore, the layered body 16 has a plurality of metal foils 12 layered in the direction Z in an arrangement intersecting the direction Z at the portion to be welded and the portion around the portion to be welded.

The metal material 11 and the layered body 16 are superimposed in the direction Z. The layered body 16 is superimposed on a surface 11a of the metal material 11, the surface 11a being positioned at an end portion of the metal material 11, the end portion being in the direction Z. Furthermore, a surface of the layered body 16 is the surface Wa of the workpiece W, the surface being positioned at an end portion of the layered body 16, the end portion being in the direction Z, and a surface of the metal material 11 is a surface Wb of the workpiece W, the surface being positioned at an end portion of the metal material 11, the end portion being in a direction opposite to the direction Z. The laser light L from the optical head 120 is output approximately along the direction opposite to the direction Z, to be irradiated onto the surface Wa. By operation of the galvanometer scanner 126, a spot of the laser light L is scanned over the surface Wa.

Irradiation with the laser light L forms a welded portion 14 penetrating the layered body 16 from the surface Wa and reaching the metal material 11 and thereby forms a metal joint 10 having the metal material 11 and the layered body 16 joined together via the welded portion 14. In other words, the metal joint 10 has the metal material 11, the layered body 16, and the welded portion 14. The welded portion 14 may also be referred to as weld metal.

Furthermore, the metal material 11, the plurality of metal foils 12, and the welded portion 14 are all conductors. The welded portion 14 electrically connects the metal material 11 and the plurality of metal foils 12 to each other. The metal material 11 and the metal foils 12 are made of, for example, aluminum-based metal, such as pure aluminum or an aluminum alloy. However, the metal material and the metal foils 12 may be made of a material that is not aluminum-based metal, such as copper-based metal, for example, oxygen-free copper or a copper alloy.

FIG. 2 is a cross-sectional view of a battery 1 that is an electrical appliance having metal joints 10. The battery 1 is one application example of the metal joint 10. In this case, the metal joints 10 are each an example of an electrical component serving as a conductor and is an example of an electrical component included in an electrical appliance. An electrical component may also be referred to as a component of an electrical appliance.

The battery 1 illustrated in FIG. 2 is, for example, a laminated lithium-ion battery cell. The battery 1 includes two exterior members 20 in film form. An accommodation space 20a is formed between the two exterior members 20. A plurality of positive electrode materials 13p, which are flat, a plurality of negative electrode materials 13m, which are flat, and a plurality of separators 15, which are flat, are accommodated in the accommodation space 20a. In the accommodation space 20a, the positive electrode materials 13p and the negative electrode materials 13m are alternately layered with the separators 15 interposed therebetween. Metal foils 12 respectively extend from the plurality of positive electrode materials 13p and the plurality of negative electrode materials 13m. In the example of FIG. 2, the plurality of metal foils 12 respectively extending from the positive electrode materials 13p are superimposed on a metal material 11p (11) at an end portion of the battery 1, the end portion being in the direction Y, and a metal joint 10 having the metal material 11p (11) and the plurality of metal foils 12 welded together is provided in the end portion. At a positive side, only part of the metal material 11p is exposed outside the exterior members 20, and the other part of the metal material 11p, the plurality of metal foils 12, and the welded portion 14 is not exposed outside the exterior members 20. The metal material 11p is included in a positive terminal of the battery 1. On the other hand, the plurality of metal foils 12 respectively extending from the negative electrode materials 13m are superimposed on a metal material 11m (11) at an end portion of the battery 1, the end portion being in a direction opposite to the direction Y, and a metal joint 10 having the metal material 11m (11) and the plurality of metal foils 12 welded together is provided in the end portion.

At a negative side also, only part of the metal material 11m is exposed outside the exterior members 20, and the other part of the metal material 11m, the plurality of metal foils 12, and the welded portion 14 is not exposed outside the exterior members 20. The metal material 11m is included in a negative terminal of the battery 1.

### Wavelength and Optical Absorptance

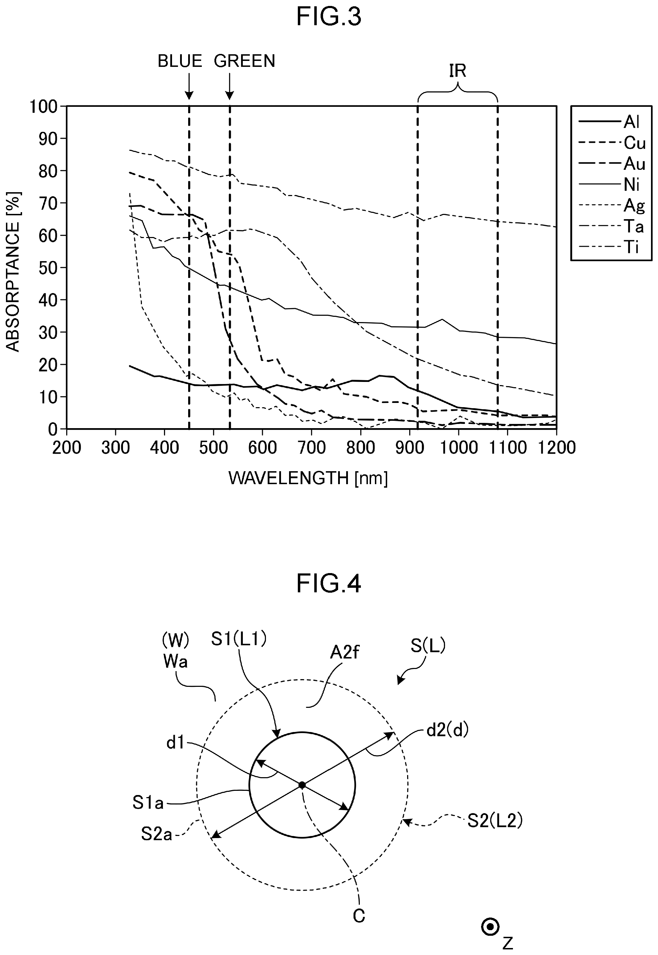

The following description is on optical absorptance of metallic materials. FIG. 3 is a graph illustrating optical absorptance of metallic materials in relation to wavelength of laser light L for irradiation. The horizontal axis in the graph of FIG. 3 corresponds to wavelength and the vertical axis to absorptance. FIG. 3 illustrates relations between wavelength and absorptance for aluminum (Al), copper (Cu), gold (Au), nickel (Ni), silver (Ag), tantalum (Ta), and titanium (Ti).

Different materials have different characteristics, but it can be understood that for the metals illustrated in FIG. 3, using blue or green laser light shorter in wavelength results in higher optical energy absorptance than using infrared (IR) laser light.

In a case where a workpiece W is irradiated with laser light comparatively lower in absorptance and comparatively longer in wavelength, optical energy is reflected at the workpiece W and it is thus difficult for the optical energy to affect the workpiece W as heat. Therefore, to obtain a molten region having a sufficient depth, application of comparatively high power is needed. In this case, energy is rapidly input at a center portion of the beam, thereby causing sublimation and forming a keyhole. However, irradiation with laser light high in power may lead to instability in the molten pool, potentially causing a spatter or voids. Furthermore, in a case where the workpiece W includes metal foils 12, the workpiece W may tend to stretch or tear more because the metal foils 12 are thin.

On the other hand, in a case where the workpiece W is irradiated with laser light comparatively higher in absorptance and comparatively shorter in wavelength, much of optical energy input is absorbed by the workpiece W and thermal energy is easily obtained. That is, without the formation of a keyhole, melting occurs in a thermal conduction mode, and the molten pool tends to be stable.

Therefore, in this embodiment, the laser light L including two types of laser light (the first laser light and the second laser light) having different wavelengths is output from the optical head 120, the surface Wa of the workpiece W is irradiated with the laser light L, and the metal material 11 and the layered body 16 are thereby welded together.

The laser device 111 (see FIG. 1) outputs, as the first laser light longer in wavelength than the second laser light, laser light having a wavelength of, for example, 800 nm or more and 1200 nm or less. The laser device 111 has, as a laser light source, for example, a fiber laser or a semiconductor laser (element).

Furthermore, the laser device 112 outputs, as the second laser light shorter in wavelength than the first laser light, laser light having a wavelength of, for example, 550 nm or less. The laser device 112 has, as a laser light source, for example, a semiconductor laser (element). Furthermore, the laser device 112 more preferably outputs second laser light having a wavelength of 400 nm or more and 500 nm or less and higher in absorptance.

FIG. 4 illustrates an example of a spot S of the laser light L formed on the surface Wa. As illustrated in FIG. 4, the spot S of the laser light L has a spot S1 of first laser light L1 and a spot S2 of second laser light L2. The spots S, S1, and S2 are instantaneous irradiation regions of laser light. Diameters of the spots S, S1, and S2 are denoted by d, d1, and d2. In this embodiment, as illustrated in FIG. 4, a size (a diameter d2) of the spot S2 is larger than a size (a diameter d1) of the spot S1, and the spot S1 is positioned in the spot S2. In other words, an outer edge S1a of the spot S1 is positioned inside an outer edge S2a of the spot S2. Such setting of the spots S1 and S2 enables thermal energy generated by irradiation with the second laser light L2 to be applied to the irradiation region of the first laser light L1 from therearound and a deeper molten pool is thus more easily formed with less energy than in a case where irradiation is performed with the first laser light L1 alone. Furthermore, temporal temperature change of the molten pool is able to be mitigated, the molten pool is thereby able to be stabilized more, resulting in effects, such as minimizing spatter and void formation and making the metal foils 12 less prone to stretching and tearing.

Furthermore, in a case where the spot S of the laser light L is scanned over the surface Wa in a scan direction intersecting the direction Z, that is, in a direction along the plane of FIG. 4, at least a region A2f that is part of the spot S2 is preferably positioned ahead of the spot S1 in the scan direction. In a case where the spot S (laser light L) is scanned, a region (the spot S1) irradiated with the first laser light L1 is thereby able to be heated beforehand by the second laser light L2. In this case also, a deeper molten pool is easily formed with less energy than in a case where irradiation is performed with the first laser light L1 alone. Furthermore, temporal temperature change of the molten pool is able to be mitigated, the molten pool is thereby able to be stabilized more, resulting in effects, such as minimizing spatter and void formation and making the metal foils 12 less prone to stretching and tearing.

In the example of FIG. 4, the center C of the spot S1 and the center C of the spot S2 overlap, but these two centers may be displaced from each other. For example, the spot S1 may partially extend beyond the spot S2 rearward in the scan direction. Furthermore, the diameters of the spots S1 and S2 on the surface Wa may be defined as diameters of regions each having an intensity that is 1/e² of its peak intensity or higher. For a spot that is not circular, a length of a region having an intensity of 1/e² of its peak intensity or higher may be defined as a diameter or width of the spot, the length being in a direction (width direction) orthogonal to the scan direction and orthogonal to the direction Z.

In a case where the laser light L is scanned over the surface Wa in the scan direction, the welded portion 14 extends in the scan direction in the cross sectional shape of FIG. 1.

### Laser Welding System

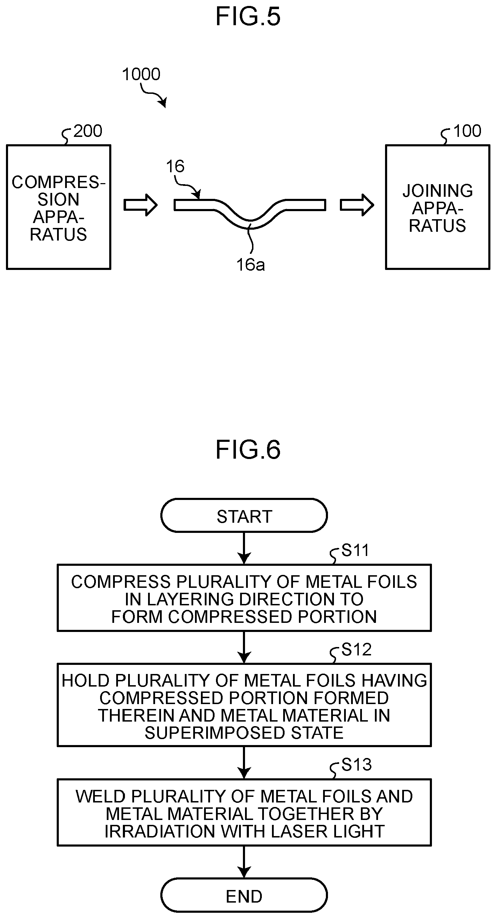

FIG. 5 is a diagram of an exemplary schematic configuration of a laser welding system 1000. As illustrated in FIG. 5, the laser welding system 1000 includes a compression apparatus 200 and the joining apparatus 100. The compression apparatus 200 forms a compressed portion 16a by partially pressing and compressing a layered body 16 of a plurality of metal foils 12 in the direction Z. The compression apparatus 200 will be described later.

The layered body 16 having the compressed portion 16a formed therein is transferred from the compression apparatus 200 to the joining apparatus 100 provided separately from the compression apparatus 200 and is joined to a metal material 11 by laser welding at the joining apparatus 100, and a metal joint 10 (see FIG. 1) is thereby obtained. That is, processing (a preliminary compression step described later) by the compression apparatus 200 and processing (a joining step described later) by the joining apparatus 100 are carried out respectively at different locations. Respectively carrying out the processing at the different locations, that is, by means of different apparatuses facilitates improving the precision of the processing.

When the layered body 16 having the compressed portion 16a formed by the compression apparatus 200 is conveyed to the joining apparatus 100 from the compression apparatus 200, the plurality of metal foils 12 have been integrated in the layered body 16. In this case, the layered state of the plurality of metal foils 12 in the layered body 16 may be maintained by another member or mechanism, such as a jig, for example, or the plurality of metal foils 12 may be integrated to enable the layered state to be maintained by themselves without use of another member or a mechanism, for example.

### Laser Welding Method

FIG. 6 is a flowchart illustrating an example of a procedure of laser welding for a workpiece W by the laser welding system 1000. Firstly, at the compression apparatus 200, a layered body of a plurality of metal foils 12 is partially pressed and compressed in the direction Z and a compressed portion 16a is thereby formed (S11). S11 is an example of a first step and may also be referred to as a preliminary compression step.

Subsequently, at the joining apparatus 100, the layered body 16 having the compressed portion 16a formed therein and the metal material 11 are held in a superimposed state by use of a jig, for example (S12).

Subsequently, by irradiation with laser light L, a surface Wa of the workpiece W is irradiated with laser light L and a molten pool formed by the irradiation with the laser light L is cooled and solidified, a welded portion 14 having the layered body 16 and the metal material 11 joined together is thereby formed, and the plurality of metal foils 12 and the metal material 11 are thereby welded together (S13). At S13, the welded portion 14 is formed, as illustrated in FIG. 1, to penetrate the plurality of metal foils 12 in the direction Z and be present within the metal material 11. S13 is an example of a second step and may also be referred to as a welding step.

### First Step (Preliminary Compression Step)

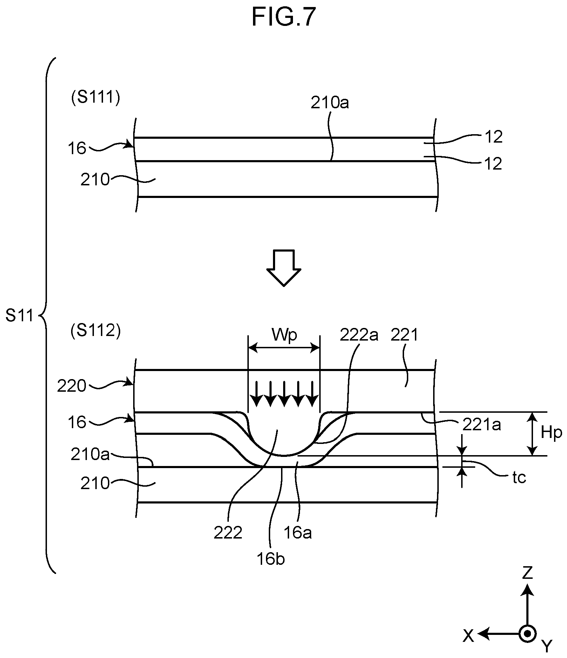

FIG. 7 is a side view illustrating an example of S11 performed at the compression apparatus 200. At S11, firstly, as illustrated in FIG. 7, a plurality of metal foils 12 are layered over a surface 210a of a first member 210, and a layered body 16 is thereby formed (S111). At the compression apparatus 200, the first member 210 has an approximately constant thickness in the direction Z and extends to intersect and be orthogonal to the direction Z. The first member 210 has the surface 210a facing the direction Z. The surface 210a extends to intersect and be orthogonal to the direction Z. The plurality of metal foils 12 are layered in the direction Z in a state of extending to intersect the direction Z. The direction Z is an example of the layering direction of the plurality of metal foils 12 in the layered body 16 and is also an example of the layering direction in which the first member 210 and the layered body 16 are superimposed.

Subsequently, in a state where the layered body 16 is interposed between the first member 210 and a second member 220 in the direction Z, the layered body 16 is compressed by the first member 210 and the second member 220 being brought relatively close to each other. The second member 220 is provided with a protruded portion 222 that is convex toward the first member 210. Therefore, the layered body 16 is compressed in the state where the layered body 16 is interposed between the first member 210 and an external surface 222a of the protruded portion 222. The compressed portion 16a curved in a state of being convex toward the first member 210 is formed approximately along the external surface 222a (S112).

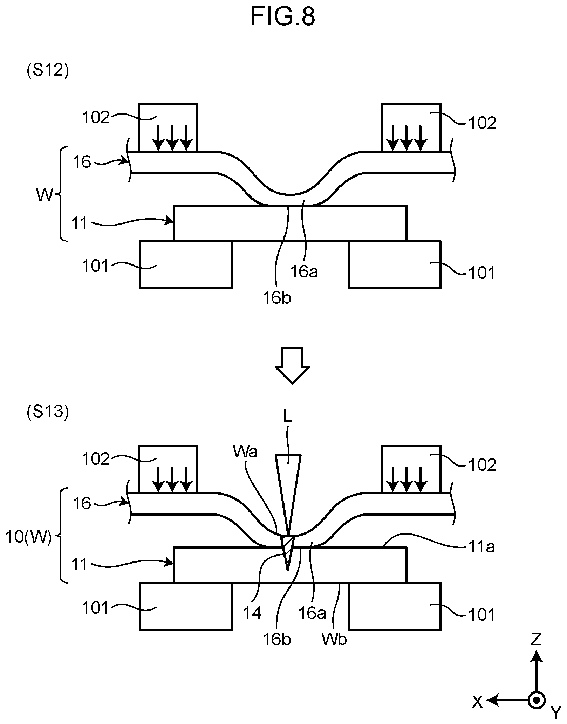

Through diligent research by the inventors, it has been found that in a case where the welded portion 14 (see FIG. 1 and FIG. 8) penetrating the plurality of metal foils 12 is formed at S13 (see FIG. 6 and FIG. 8), the wider the gap between metal foils 12 adjacent to each other in the direction Z, the more easily the metal foils 12 are stretched or torn. This is presumed to be because when there is a gap between adjacent ones of the metal foils 12 at a portion irradiated with laser light or near the portion, conduction of heat between the adjacent ones of the metal foils 12 is hindered, the heat having been generated by the irradiation with laser light, and heat concentration thereby tends to occur at the portion irradiated with the laser light. In this respect, in the embodiment, forming the compressed portion 16a enables the gap to be reduced (preferably, the gap is eliminated or minimized) in the compressed portion 16a, as compared to the gap before compression of the adjacent metal foils 12, and welding the plurality of metal foils 12, that is, the layered body 16 in the compressed portion 16a thus enables the metal foils 12 to be prevented from stretching or tearing.

At the compression apparatus 200, the second member 220 has a plate portion 221 and a protruded portion 222. The plate portion 221 has an approximately constant thickness in the direction Z and extends to intersect and be orthogonal to the direction Z. The plate portion 221 has a surface 221a facing the direction opposite to the direction Z. The surface 221a extends to intersect and be orthogonal to the direction Z. The protruded portion 222 protrudes from the surface 221a in the direction opposite to the direction Z, toward the first member 210. The protruded portion 222 is configured as a convex rib extending in the direction Y and having a predetermined width Wp in the direction X and a predetermined height Hp in the direction Z. The external surface 222a of the protruded portion 222 has a curved shape projecting in the direction opposite to the direction Z in at least a portion that comes into contact with the layered body 16, and has, at least at its end portion in the direction opposite to the direction Z, a curved shape projecting in the direction opposite to the direction Z and a columnar shape extending in the direction Y. Specifically, for example, of the external surface 222a, a portion closer to the first member 210 than a position halfway through the protrusion height of the protruded portion 222 is formed into a cylindrical surface. This configuration enables the metal foils 12 to be prevented from stretching or tearing at S112 (S11). The direction opposite to the direction Z is an example of a protruding direction of the protruded portion 222 and is also an example of a first direction that is a protruding direction of the compressed portion 16a. The direction Y is an example of a third direction. The direction X is an example of a fourth direction. Furthermore, the external surface 222a is an example of a convex curved surface that is convex toward the first member 210 at S112.

Furthermore, at S112, the metal foils 12 are preferably plastically deformed at the compressed portion 16a. This is because the metal foils 12 that are elastically deformed without being plastically deformed will return to their original shape before pressing when pressing by means of the protruded portion 222 is released, and gaps between adjacent metal foils 12 may thus be widened, or the metal foils 12 may stretch or tear when the metal foils 12 return to their original shape.

Through diligent research by the inventors, it has been found that in a state where the first member 210 lacks hardness (rigidity), the metal foils 12 are more likely to be elastically deformed at positions nearer to a distal end of the compressed portion 16a, the distal end being in its protruding direction, that is, in the direction (first direction) opposite to the direction Z. This is because the first member 210 itself is elastically deformed by the pressing force acting at S112 and the pressing force acting on the metal foils 12 is thereby decreased. Therefore, at S112, the compressed portion 16a is preferably formed such that at least the metal foil 12 positioned at an end portion of the compressed portion 16a, the end portion being in the direction opposite to the direction Z, is plastically deformed partially, that is, in at least part of a portion superimposing on the protruded portion 222 in the direction Z. Furthermore, at least a portion of the first member 210 is preferably made of a material having as high a rigidity (Young's modulus) as possible, the portion superimposing on the protruded portion 222, and from this perspective, at least the portion is preferably made of a material having a Young's modulus higher than the Young's modulus of the metal material 11. Furthermore, similarly, at least the protruded portion 222 of the second member 220 is preferably made of a material having as high a rigidity (Young's modulus) as possible, and is preferably made of a material having a Young's modulus higher than the Young's modulus of the metal material 11. A metal foil 12 positioned at the end portion in the direction opposite to the direction Z is a metal foil 12 that comes into contact with the metal material 11 at later S12 and S13 and at the metal joint 10 (see FIG. 8).

Furthermore, at S112, adjacent ones of the metal foils 12 are preferably joined together partially in the compressed portion 16a. This is because by the adjacent ones of the metal foils 12 being joined together, the gaps between the adjacent ones of the metal foils 12 are able to be prevented from widening when the pressing by the protruded portion 222 is released, and the metal foils 12 are able to be prevented from stretching or tearing when the metal foils 12 return to their original shape.

Through diligent research by the inventors, it has been found that in a case where the metal foils 12 are made of an aluminum-based material or a copper-based material, pressing the metal foils 12 under appropriate conditions at S112 partially joins adjacent ones of the metal foils 12 by room temperature joining (low temperature joining). In other words, at S112, adjacent ones of the metal foils 12 are preferably joined together at room temperature partially in the compressed portion 16a, at any position in the direction Z.

Furthermore, as illustrated in FIG. 5, there is also an advantage that integrating the plurality of the metal foils 12 through S112 facilitates conveyance of the layered body 16 from the compression apparatus 200 to the joining apparatus 100 because the metal foils 12 are prevented from being separated from one another.

From this perspective, all of the metal foils 12 in the compressed portion 16a are preferably brought into a state where they are partially joined to the metal foils 12 adjacent thereto. However, even in a case where all of the metal foils 12 in the layered body 16 have not been partially joined to the metal foils 12 adjacent thereto, that is, even in a case where the layered body 16 includes any metal foil 12 that has not been partially joined to a metal foil 12 adjacent thereto, if the layered body 16 has been integrated without use of another member or mechanism, such as a jig, effects similar to those in a case where all of the metal foils 12 in the compressed portion 16a have been partially joined to the metal foils 12 adjacent thereto, that is, effects, such as making the metal foils 12 less prone to stretching and tearing and reducing the conveyance work, may be obtained.

Furthermore, the metal foil 12 positioned at an end portion in the direction Z or at the end portion in the direction opposite to the direction Z tends to stretch or tear upon contact with the metal material 11 at S13 or irradiation with laser light, and the metal foil 12 is thus preferably joined with the adjacent metal foil 12 partially in the compressed portion 16a.

Through diligent research by the inventors, it has been found that the compressed portion 16a preferably has a thickness tc in the layering direction, the thickness tc being 40% or more and 60% or less of a thickness of the plurality of metal foils 12 in a state of having been layered without gaps and without being compressed, the thickness being in the layering direction. When the thickness was smaller than 40%, the metal foils 12 were broken at S112 and when the thickness was larger than 60%, plastic deformation of the metal foils 12 became less likely to occur. The thickness of the plurality of metal foils 12 in the layering direction in the state where the plurality of metal foils 12 have been layered without gaps and without being compressed may be calculated by using the formula: the mean thickness of the metal foils 12 multiplied by the number of metal foils 12 layered.

Furthermore, as illustrated in FIG. 7, at S112, the surface 221a of the plate portion 221 preferably restricts movement of the layered body 16 in the direction Z, the surface 221a being positioned on one side of the layered body 16, the one side being opposite a side where the first member 210 is. Without the surface 221a, the layered body 16 would be deformed into an approximately V-shaped form having the distal end of the compressed portion 16a as the bottom, under the pressing by the protruded portion 222, and if the layered body 16 were then superimposed on the metal material 11 at S12 and S13, the gap between the layered body 16 and the metal material 11 would increase at a portion away from the compressed portion 16a, making it difficult to obtain a specified shape of the metal joint 10. Furthermore, conveyance of the layered body 16 from the compression apparatus 200 to the joining apparatus 100 and setting of the layered body 16 at S12 would also be difficult. In this respect, in this embodiment, providing the surface 221a at a specified distance from the surface 210a of the first member 210 enables the layered body 16 to be prevented from being deformed into a V-shape. The surface 221a is an example of a restriction portion.

### Second Step (Joining Step)

FIG. 8 is a side view illustrating an example of S12 and S13 performed at the joining apparatus 100. As illustrated in FIG. 8, firstly, the metal material 11 is placed on a stage 101 and the layered body 16 is further placed thereon. Upon this placement, the layered body 16 and the metal material 11 are superimposed in the direction Z so that an end portion 16b of the compressed portion 16a contacts the surface 11a of the metal material 11, the end portion 16b being in the direction opposite to the direction Z.

At S12, the workpiece W having the metal material 11 and the layered body 16 superimposed on each other are supported by the stage 101 and a pressing member 102 in a state of being interposed between the stage 101 and the pressing member 102 in the direction Z. The stage 101 and the pressing member 102 are an example of a support mechanism.

In this state, the pressing member 102 presses the layered body 16 at a position away from the compressed portion 16a in the direction X or in a direction opposite to the direction X, so that its pressing force does not directly act on the compressed portion 16a. As a result, peeling of the metal foils 12 in the compressed portion 16a, misalignment between adjacent ones of the metal foils 12, and release of the joined state between the adjacent ones of the metal foils 12, caused by the pressing force from the pressing member 102, are able to be reduced.

Furthermore, in this state, the stage 101 and the pressing member 102 preferably have the metal material 11 and the layered body 16 interposed between the stage 101 and the pressing member 102 in the direction Z in a state where a surface pressure lower than a surface pressure acting on a portion of the layered body 16 is acting on the layered body 16, the portion superimposing on the protruded portion 222 in the direction opposite to the direction Z at S11. This is because if the pressing force by the pressing member 102 is too large, peeling of the metal foils 12 in the compressed portion 16a, misalignment between adjacent ones of the metal foils 12, and release of the joined state between the adjacent ones of the metal foils 12, as well as bending of the layered body 16 and deformation of the compressed portion 16a, for example, may occur.

Subsequently, as described above, in a state where the workpiece W has been supported to be prevented from moving by the stage 101 and the pressing member 102, the workpiece W is irradiated with laser light (S13). In the example of FIG. 8, a surface of the layered body 16, the surface being on a side opposite to a side where the metal material 11 is, that is, the surface Wa positioned at the end portion of the layered body 16, the end portion being in the direction Z, is irradiated with the laser light L. A molten pool penetrating the layered body 16 into the metal material 11 is formed in the workpiece W, the molten pool is cooled, and the welded portion 14 is thereby formed. That is, the welded portion 14 penetrates the layered body 16 and is present within the metal material 11; the layered body 16, that is, the plurality of metal foils 12 and the metal material 11 are welded together by the welded portion 14; and the metal joint 10 is thereby formed. The welded portion 14 may also be referred to as weld metal.

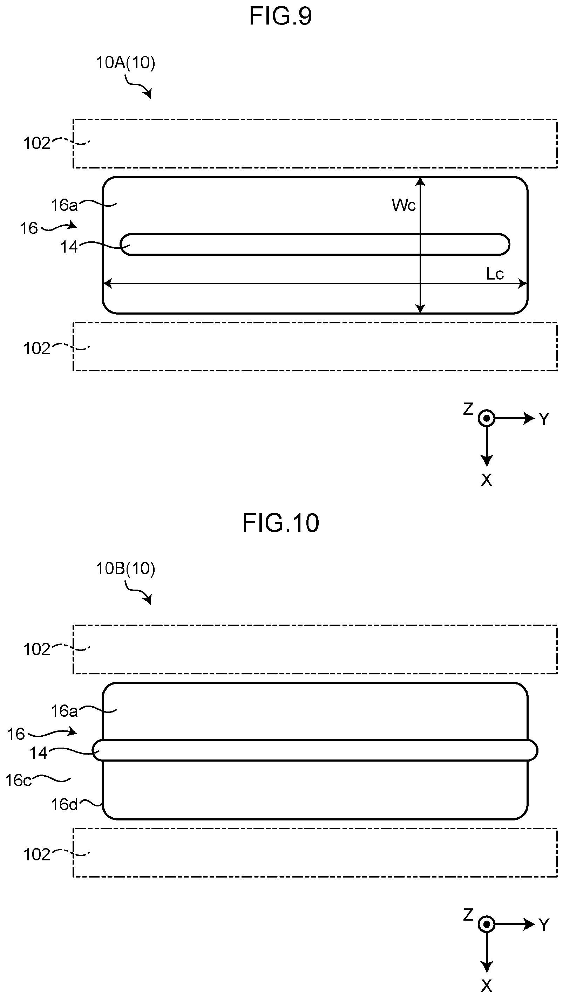

FIG. 9 is a plan view of a metal joint 10A (10). As illustrated in FIG. 9, in this embodiment, a welded portion 14 penetrates only a compressed portion 16a in a layered body 16. Furthermore, in the example of FIG. 9, a length Lc of the compressed portion 16a in the direction Y is larger than a width Wc thereof in the direction X. In this configuration, by the welded portion 14 being formed to be longer, the region joined by the welded portion 14 is enlarged and specified joint strength is obtained more easily. This configuration is achieved by the shape of the protruded portion 222. That is, in this case, the external surface 222a of the protruded portion 222 is formed into a columnar surface extending longer in the direction Y than its width in the direction X.

As described above, in this embodiment, forming the compressed portion 16a in the layered body 16 enables gaps to be eliminated or minimized in the compressed portion 16a, the gaps being between adjacent ones of metal foils 12, and welding a plurality of metal foils 12 in the compressed portion 16a, that is, the layered body 16 thus enables the metal foils 12 to be prevented from stretching or tearing.

### First Modified Example

FIG. 10 is a plan view of a metal joint 10B (10) of a first modified example. As illustrated in FIG. 10, in this first modified example, a welded portion 14 extends not only within a compressed portion 16a but also beyond the compressed portion 16a. In other words, the welded portion 14 extends across a boundary 16d between the compressed portion 16a and a non-compressed portion 16c in a layered body 16. This configuration enables the region joined by the welded portion 14 to be enlarged.

### Second Modified Example

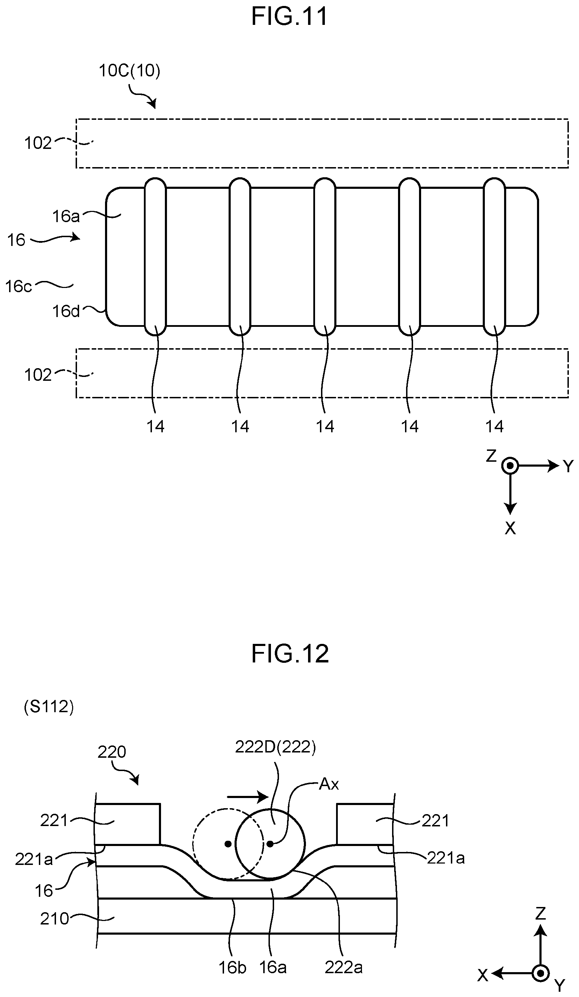

FIG. 11 is a plan view of a metal joint 10C (10) of a second modified example. As illustrated in FIG. 11, in this second modified example, a metal material 11 and a layered body 16 are welded together by a plurality of welded portions 14 extending in the direction X with intervals in the direction Y. Furthermore, in this second modified example also, the welded portions 14 extend not only within a compressed portion 16a but also beyond the compressed portion 16a. This configuration also enables the regions joined by the welded portions 14 to be enlarged.

### Third Modified Example

FIG. 12 is a side view illustrating S112 (S11) of a third modified example. As illustrated in FIG. 12, in this third modified example, a protruded portion 222 is a roller capable of rolling about a rotation axis Ax extending in the direction Y. In this case, the protruded portion 222 presses a layered body 16 in the direction opposite to the direction Z while rolling in the direction X or the direction opposite to the direction X and thereby compresses the layered body 16 and forms a compressed portion 16a. This configuration enables formation of the compressed portion 16a wider in the direction X. In this case, an external surface 222a of the protruded portion 222 is the outer peripheral surface of the roller and is formed into a cylindrical surface.

### Fourth Modified Example

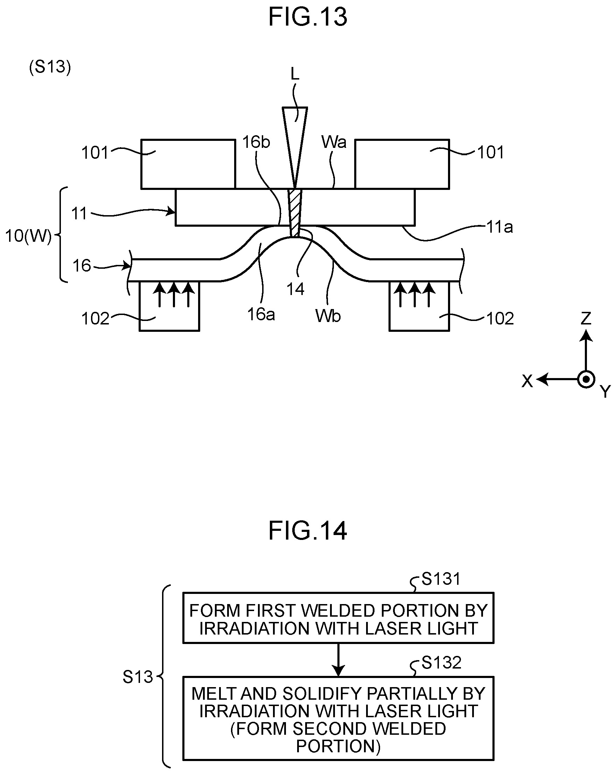

FIG. 13 is a side view illustrating S13 of a fourth modified example. As illustrated in FIG. 13, in this fourth modified example, positions (superimposition order) of a metal material 11 and a layered body 16 are reversed in the direction Z relative to S13 in FIG. 8, and the metal material 11, that is, a surface Wa of the metal material 11 is irradiated with laser light L, the surface Wa being positioned at an end portion of the metal material 11, the end portion being on a side opposite to a side where the layered body 16 (the plurality of metal foils 12) is. In this case, a welded portion 14 penetrates the metal material 11 and also penetrates a compressed portion 16a. In this modified example also, similarly to the first embodiment described above, effects resulting from provision of the compressed portion 16a are obtained.

### Second Embodiment

FIG. 14 is a flowchart illustrating another example of the procedure of the laser welding for a workpiece W by the joining apparatus 100. As illustrated in FIG. 14, in this embodiment, S13 in the above described first embodiment (see FIG. 6) has S131 and S132.

At S131, by irradiation with laser light L, a surface Wa of the workpiece W is irradiated with the laser light L, a molten pool formed by the irradiation with the laser light L is cooled and solidified, and a first welded portion 14F resulting from welding of a compressed portion 16a in a layered body 16 and a metal material 11 is thereby formed. S131 is an example of a third step.

Furthermore, in welding metal foils 12, the metal foils 12 may tear and a gap may be formed near a boundary between a welded portion and the metal foils 12, or the metal foils 12 in a portion in contact with the welded portion may stretch and a thin portion that is too thin may be formed. S131 is performed under conditions where such a gap or a thin portion is not basically formed or is difficult to be formed, but in a case where the number of metal foils 12 is comparatively large, for example, for some of the metal foils 12, a gap or a thin portion that is too thin may be generated locally.

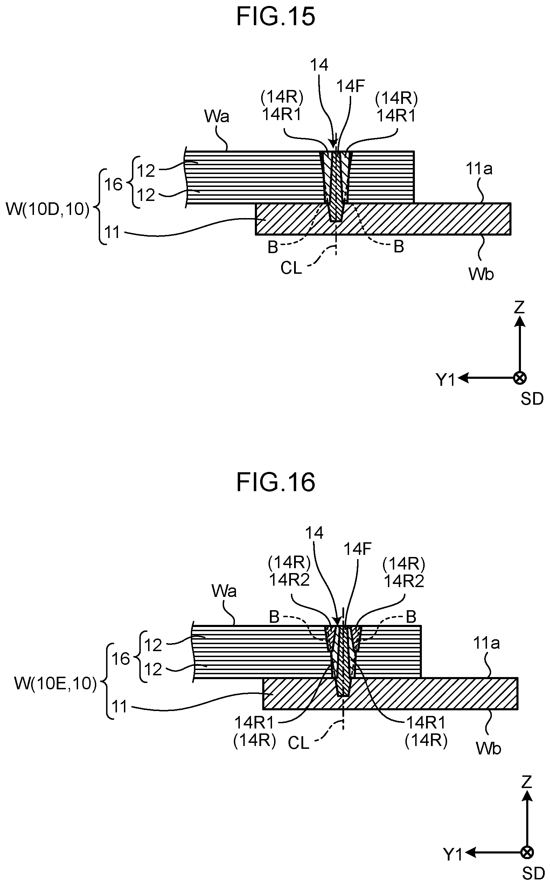

Therefore, in this embodiment, after S131, a second welded portion 14R illustrated in FIG. 15 is formed by irradiating a region near a boundary B between the first welded portion 14F and the metal foils 12 with laser light L (S132). At S132, in a case where a gap has been formed between the first welded portion 14F and the metal foils 12, a portion adjacent to the gap melts and solidifies, thereby forming the second welded portion 14R.
Furthermore, in a case where a thin portion, which is too thin, has been generated at a connection between the first welded portion 14F and the metal foils 12, the thin portion and a region near the thin portion melt and solidify, thereby forming the second welded portion 14R. According to this embodiment, S132 enables any gap or excessively thin portion to be prevented from being formed more infallibly. S132 may be said to be a step of restoring or improving the joined state at S131. In the example of FIG. 15, the laser light L is irradiated onto the surface Wa while being scanned over the surface Wa in a scan direction SD, but without being limited to this example, fixed-point irradiation may be adopted. In this case, the fixed-point irradiation is performed at a plurality of points on the surface Wa. S132 is an example of a fourth step.

Furthermore, at S132, like in the example of FIG. 15, irradiation with the laser light L may be performed multiple times and the second welded portion 14R may be formed at multiple places.

Furthermore, at S132, by setting conditions for irradiation with the laser light L appropriately, the second welded portion 14R may be formed at multiple places at different positions in the layering direction of the metal foils 12.

FIG. 16 is a cross-sectional view of a workpiece W having a plurality of second welded portions 14R1 (14R) and a plurality of second welded portions 14R2 (14R) formed therein by irradiation with laser light L multiple times at S132. In the example of FIG. 16, the second welded portions 14R2 are formed by: emission of laser light L to regions near boundaries B between a first welded portion 14F and metal foils 12 on a surface Wa again after formation of the second welded portions 14R1 illustrated in FIG. 15; and melting, cooling, and solidification of part of the first welded portion 14F, the second welded portions 14R1, and the metal foils 12.

As illustrated in FIG. 16, positions of the second welded portions 14R1 and the second welded portions 14R2 in a direction Y1, in other words, positions in a direction intersecting the direction Z, a direction along the surface Wa, or a direction intersecting the layering direction of the metal foils 12 are different from each other, and their positions in the direction Z, in other words, their positions in the layering direction of the metal foils 12 are also different from each other.

The positions of the second welded portions 14R in the direction along the surface Wa may be changed by changing the irradiation positions of the spot of the laser light L on the surface Wa. At S132, the laser light L travels in the negative direction along the direction Z while its energy is being absorbed by the metal foils 12, and as illustrated in FIG. 15 and FIG. 16, the first welded portion 14F thus has a tapered shape that narrows in width with increasing distance from the surface Wa. Accordingly, the boundaries B between the first welded portion 14F and the plurality of metal foils 12 often incline such that, as their distances from the surface Wa increase, the boundaries B approach the width direction (direction Y1) center (the center line CL in this case) of the first welded portion 14F. Therefore, the plurality of second welded portions 14R formed by melting and solidification of the regions near the boundaries B are preferably positioned nearer to the width direction center of the first welded portion 14F as their distances from the surface Wa increase. In the example of FIG. 16, the width direction centers of the second welded portions 14R1 formed near part of the boundaries B, the part being farther from the surface Wa, are positioned nearer to the width direction center (center line CL) of the first welded portion 14F than the width direction centers of the second welded portions 14R2 formed near part of the boundaries B, the part being nearer to the surface Wa.

Furthermore, positions of the second welded portions 14R in the layering direction of the metal foils 12, in other words, their positions in the irradiation direction of the laser light L can be changed by changing the power of the laser light L. Specifically, the second welded portions 14R can be formed at positions farther from the surface Wa, that is, at deeper positions, or, in other words, more forward in the irradiation direction, as the power increases. That is, the second welded portions 14R can be formed at positions nearer from the surface Wa, in other words, at shallower positions, or, in other words, more rearward in the irradiation direction, as the power decreases.

In the example of FIG. 16, end portions of the second welded portions 14R1, the end portions serving as bottom portions of the second welded portions 14R1 and being in the negative direction along the direction Z, are positioned farther from the surface Wa than end portions of the second welded portions 14R2, the end portions serving as bottom portions of the second welded portions 14R2 and being in the negative direction along the direction Z. That is, the second welded portions 14R2 are positioned more rearward in the irradiation direction of the laser light L than the second welded portions 14R1.

The second welded portions 14R2 may be formed by: emission of the laser light L to regions near boundaries between the second welded portions 14R1 and the metal foils 12 on the surface Wa; and melting, cooling, and solidification of part of the second welded portions 14R1 and metal foils 12.

Furthermore, in the example of FIG. 16, the second welded portions 14R1 and 14R2 are formed at four places by four instances of irradiation with the laser light L, but without being limited to this example, the number of second welded portions 14R (that is, the number of instances of irradiation with the laser light L at S132), and specifications, such as positions, widths, and lengths of the second welded portions 14R may be set variously. Furthermore, in the example of FIG. 16, the second welded portions 14R1 and 14R2 in two stages at different positions in the layering direction of the metal foils 12 (irradiation direction) are formed, but second welded portions 14R in three or more stages at different positions in the layering direction may be formed. Furthermore, in the example of FIG. 16, the second welded portions 14R2 positioned more rearward in the irradiation direction than the second welded portions 14R1 are formed after the second welded portions 14R1, but the order in which the plurality of second welded portions 14R are formed is not limited to this example and may be set variously, and for example, the second welded portions 14R1 may be formed after the second welded portions 14R2.

As illustrated in FIG. 16, according to this embodiment, a metal joint 10E (10) having a layered body 16 and a metal material 11 joined together by means of a welded portion 14 including the first welded portion 14F and the second welded portions 14R is formed. In a case where a cross section similar to that in FIG. 16 is formed by cutting a metal joint 10, a first welded portion 14F and second welded portions 14R (14R1 and 14R2) may be distinguished respectively as different regions on the basis of, for example, differences in surface roughness in the cross section, differences in properties, such as crystal orientation and particle size, and differences in brightness in an image having the cross section captured therein. The cross section having a plurality of regions having such differences may serve as evidence that the method of the embodiment has been implemented. In a case where the state of joining at the welded portion 14 including the first welded portion 14F and the second welded portions 14R at the stage of FIG. 15 is favorable, a metal joint 10D (10) having the layered body 16 and the metal material 11 joined together by the welded portion 14 is formed.

### Fifth Modified Example

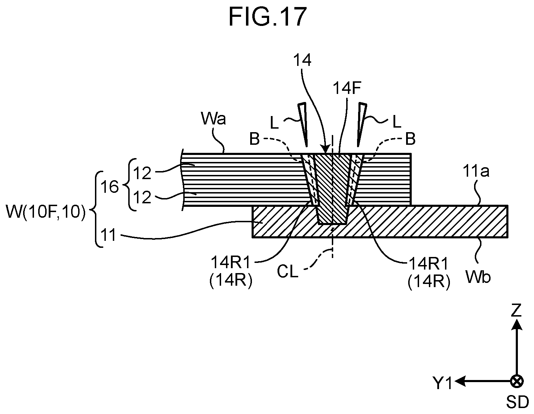

Furthermore, at S132, the laser light L may be irradiated in a direction inclined with respect to the irradiation direction of laser light at S131, that is, the negative direction along the direction Z. FIG. 17 is a cross-sectional view of a workpiece W having second welded portions 14R1 (14R) formed in this case. As described above, boundaries B often incline such that, as their distances from a surface Wa increase, the boundaries B approach the width direction center (a center line CL) of a first welded portion 14F. Therefore, the irradiation with the laser light L at an angle inclined with respect to the negative direction along the direction Z so as to follow the inclination of the boundaries B may enable more efficient formation of second welded portions 14R along the boundaries B. Furthermore, although this is not illustrated in the drawings, second welded portions 14R other than the second welded portions 14R1, the second welded portions 14R being like the second welded portions 14R2, may be formed by emission of laser light L in a direction inclined with respect to the negative direction along the direction Z so as to follow the boundaries B. Changing or setting the irradiation direction of the laser light L may be achieved by, for example, controlling and setting angles of the mirrors 126a and 126b of the galvanometer scanner 126, or by controlling and setting the inclination angle of the optical head 120 relative to a support table. In a case where the state of joining at a welded portion 14 including the first welded portion 14F and the second welded portions 14R at the stage of FIG. 17 is favorable, a metal joint 10F (10) having a layered body 16 and a metal material 11 joined together by the welded portion 14 is formed.

### Conditions for Performing S132

On the basis of experimental research, the inventors have found that at S132 described above, irradiation with laser light L under predetermined conditions enables formation of second welded portions 14R that are suitable. In experiments, at both S131 and S132, a first welded portion 14F and the second welded portions 14R were formed by scanning a spot S of the laser light L over a surface Wa. The scanning enables formation of the first welded portion 14F and the second welded portions 14R over a wider range in a shorter period of time.

The experiments were performed with respect to a case where both a metal material 11 and twenty metal foils 12 were made of aluminum-based metal. Furthermore, at S131 and S132, a diameter d1 of a spot S1 of first laser light L1 was 20 to 40 µm, and a diameter d2 of a spot S2 of second laser light L2 was 300 to 350 µm. At S131, power of the first laser light L1 was 80 to 200 W, power of the second laser light L2 was 100 to 200 W, and a scanning speed was 0.1 to 0.2 m/sec; at S132, the power of the first laser light L1 was 80 to 350 W, the power of the second laser light L2 was 100 to 200 W, and the scanning speed was 0.5 to 1.5 m/sec; and at S132, the power of the first laser light L1 was 300 to 500 W, the power of the second laser light L2 was 100 to 200 W, and the scanning speed was 0.5 to 1.2 m/sec.

Through experimental research, it has been found that the irradiation with the laser light L is preferably performed under the following conditions (1) to (3).
(1) The scanning speed at S132 is made faster than the scanning speed at S131.
(2) The amount (total amount) of energy applied to a workpiece W by irradiation with laser light L in each irradiation instance for forming second welded portions 14R during S132 is made smaller than the amount (total amount) of energy applied to the workpiece W by irradiation with laser light L at S131.

The above conditions (1) and (2) enable a width of the second welded portion 14R, the width being in a direction (direction Y1) orthogonal to a scan direction, to be narrower than a width of the first welded portion 14F, the width being in the direction orthogonal to the scan direction SD, and enable the second welded portion 14R to be formed near a boundary B, the second welded portion 14R having an appropriate width not too wide. Wasteful energy consumption is thereby able to be reduced. In a case where the irradiation with the laser light L is performed multiple times at S132, the scan speed in each irradiation instance for forming the second welded portions 14R may be varied.

(11) The power of laser light L at S132 is made lower than the power of laser light L at S132.

The second welded portions 14R having appropriate depths are thereby able to be formed at S132.

In this embodiment also, similarly to the first embodiment described above, effects of providing a compressed portion 16a are able to be obtained.

### Third Embodiment

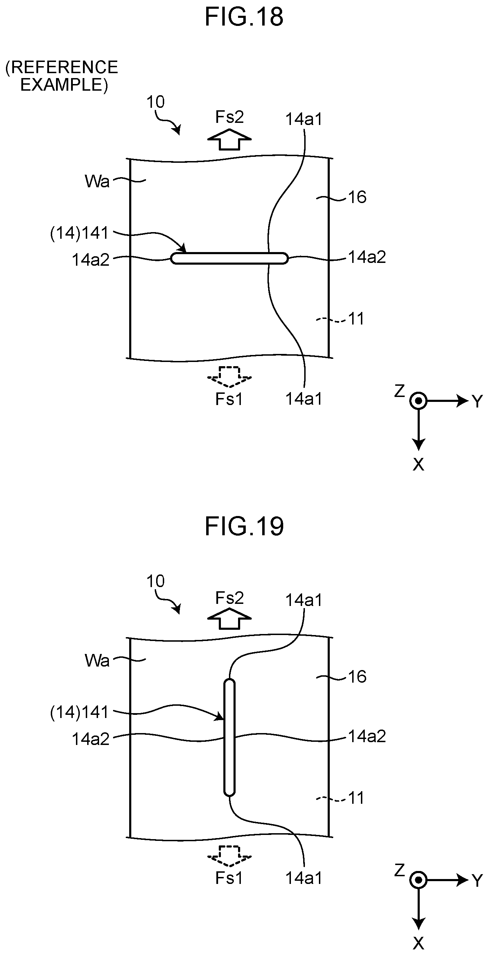

In this embodiment, a welded portion 14 includes at least one bead 141 (see FIG. 19 to FIG. 26). Parts including the bead 141 (welded portion 14) may be made by a method similar to those of the above described first embodiment and second embodiment and modified examples thereof.

Tensile Shear Strength of Metal Joint Corresponding to Relative Angle Between Tensile Force Acting Direction and Bead Extension Direction

FIG. 18 is a plan view of a metal joint 10 of a reference example. Furthermore, FIG. 19 is a plan view of a metal joint 10 of this embodiment. In each of the examples of FIG. 18 and FIG. 19, a layered body 16 and a metal material 11 are joined by a welded portion 14 including only one bead 141. In either case, as illustrated in FIG. 8, the bead 141 penetrates the layered body 16, that is, a plurality of metal foils 12 in the direction Z and is present within the metal material 11.

The beads 141 in the reference example of FIG. 18 and in this embodiment of FIG. 19 extend in different directions. In the reference example of FIG. 18, the bead 141 extends along the direction Y, and in the embodiment of FIG. 19, the bead 141 extends along the direction X. The directions in which the beads 141 extend are different between the reference example of FIG. 18 and the embodiment of FIG. 19, but specifications of the beads 141, such as their widths, lengths, and depths, and various conditions in their compression step and joining step are the same.

The inventors conducted diligent research through experiments and simulations with respect to fracture strength (tensile shear strength) in a case where a tensile force Fs1 acts on the metal material 11 in the direction X and a tensile force Fs2 acts on the layered body 16 (plurality of metal foils 12) in the direction opposite to the direction X, for each of the metal joints 10 of FIG. 18 and FIG. 19. The tensile forces Fs1 and Fs2 are of the same magnitude and are forces in mutually opposite directions. Shear stress is generated in the welded portion 14 due to the action of the tensile forces Fs1 and Fs2. The tensile forces Fs1 and Fs2 may also be referred to as shear forces.

Through research, the following findings were obtained. That is, it has been found that: in a situation where the tensile force Fs1 and Fs2 are acting, cracks are more easily generated in boundary portions 14a1 and 14a2 between the bead 141 (welded portion 14) and the base material than in other portions of the metal joint 10; cracks are easily generated in part of the boundary portions 14a1 and 14a2, the part extending in a direction intersecting the directions in which the tensile forces Fs1 and Fs2 act (the direction X and the direction opposite to the direction X), and in particular, cracks are most likely to be generated in the boundary portions 14a1 included in the reference example of FIG. 18 and extending in the direction (direction Y) approximately orthogonal to the directions in which the tensile forces Fs1 and Fs2 act; and among the boundary portions 14a1 and 14a2, cracks are more difficult to be generated in the boundary portions 14a2 included in the embodiment of FIG. 19 and extending approximately along the directions in which the tensile forces Fs1 and Fs2 act, than in other portions including the boundary portions 14a1. That is, it has been found that the metal joint 10 having the boundary portions 14a2, that is, the bead 141 extending a long way along the directions in which the tensile forces Fs1 and Fs2 act, like in the embodiment of FIG. 19, is higher in tensile shear strength than the metal joint 10 having the boundary portions 14a1, that is, the bead 141 extending a long way along the direction intersecting the directions in which the tensile forces Fs1 and Fs2 act, like in the reference example of FIG. 18. Furthermore, it has also been found that: cracks generated in the boundary portions 14a1 extending a long way along the direction intersecting the directions in which the tensile forces Fs1 and Fs2 act, like in the reference example of FIG. 18, propagate along the boundary portions 14a1 due to the action of the tensile forces Fs1 and Fs2, and thus the longer the boundary portions 14a1, the lower the tensile shear strength; and even if cracks are generated in the boundary portions 14a2 extending a long way along the directions in which the tensile forces Fs1 and Fs2 act, like in the embodiment of FIG. 19, it is difficult for the cracks to propagate. The direction X and the direction opposite to the direction X are an example of directions in which the tensile forces Fs1 and Fs2 acting on the metal joint 10 are the largest among directions intersecting the direction Z.

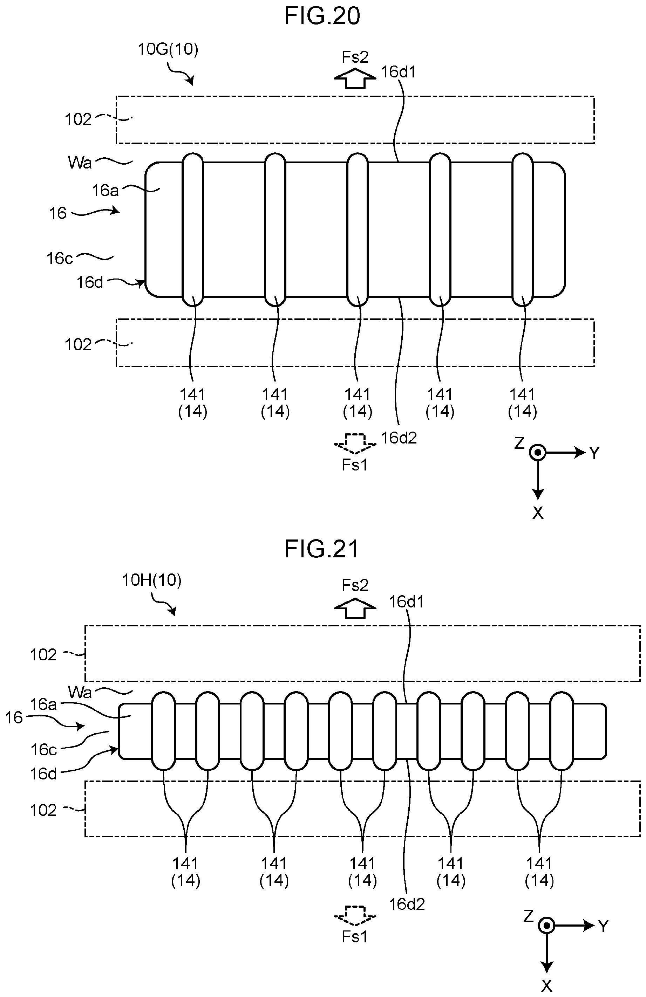

FIG. 20 is a plan view illustrating an example of a configuration of welded portions 14 in a metal joint 10A (10) comparatively high in tensile shear strength and based on the above mentioned findings. In the example of FIG. 20, the welded portions 14 in the metal joint 10A in which tensile forces Fs1 and Fs2 act on its layered body 16 and metal material 11 in the direction X and the direction opposite to the direction X include a plurality of beads 141 extending in the direction X, and the plurality of beads 141 are provided at predetermined intervals (intervals between center lines of the beads 141) in the direction Y. According to this configuration, because the beads 141 extend along the direction X and the direction opposite to the direction X in which the tensile forces Fs1 and Fs2 act, even in a case where the tensile forces Fs1 and Fs2 are acting, it is difficult for cracks to be generated in boundary portions between the beads 141 and the base material and even if cracks are generated in the boundary portions, it is difficult for the cracks to propagate. That is, this embodiment enables obtainment of the metal joint 10A higher in tensile shear strength. The direction X or the direction opposite to the direction X is an example of a second direction, and the direction Y or the direction opposite to the direction Y is an example of a fifth direction.

Furthermore, in a case where the welded portion 14 has only one bead 141 extending a long way in the direction X, a region long in the direction X is needed for the welded portion 14 to be formed, and applicable places may be limited. In this respect, in the example of FIG. 20, the plurality of beads 141 extending in the direction X and each having a shape of line segment are provided at intervals in the direction Y, and regions needed for the welded portions 14 to be formed are able to be made shorter in the direction X and longer in the direction Y than in the example of FIG. 19. Specified conductance in the welded portions 14 is able to be achieved by the entire length of the plurality of beads 141 included in the welded portions 14 (the area of the welded portions 14 in plan view in the direction opposite to the direction Z). In other words, as the length of the beads 141 increases, the conductance is able to be increased, that is, the electrical resistance is able to be reduced.

Furthermore, in the example of FIG. 20, the beads 141 extends not only within a compressed portion 16a but also beyond the compressed portion 16a. In other words, the beads 141 extend across boundaries 16d1 and 16d2 (16d) between the compressed portion 16a and a non-compressed portion 16c in the layered body 16. This configuration enables further enlargement of regions joined by the welded portions 14 and thus increase in conductance. Furthermore, even in a situation where stress concentrates at the boundary 16d due to the tensile forces Fs1 and Fs2 or other external forces, the beads 141 can reinforce the boundary 16d and deformation or fracture originating from the boundary 16d is able to be reduced.

Furthermore, in the example of FIG. 20, the beads 141 are provided to extend across the two boundaries 16d1 and 16d2 away from each other in the direction Y. This configuration enables the two boundaries 16d1 and 16d2 to be reinforced by a joining step of forming one bead 141. That is, a comparatively simple configuration and a comparatively untroublesome step enable the boundaries 16d1 and 16d2 to be reinforced efficiently. One of these two boundaries 16d1 and 16d2 is an example of a first boundary and the other one is an example of a second boundary.

### Sixth Modified Example

FIG. 21 is a plan view of a metal joint 10H (10) of a fifth modified example. As is evident from a comparison between FIG. 21 and FIG. 20, in the example of FIG. 21, the number of beads 141 is larger, individual lengths of the beads 141 in the direction X are shorter, and intervals between the beads 141 in the direction Y are narrower, as compared with the example of FIG. 20. This configuration enables specified conductance and specified tensile shear strength to be obtained even in a case where regions where welded portions 14 are formed are shorter in the direction X.

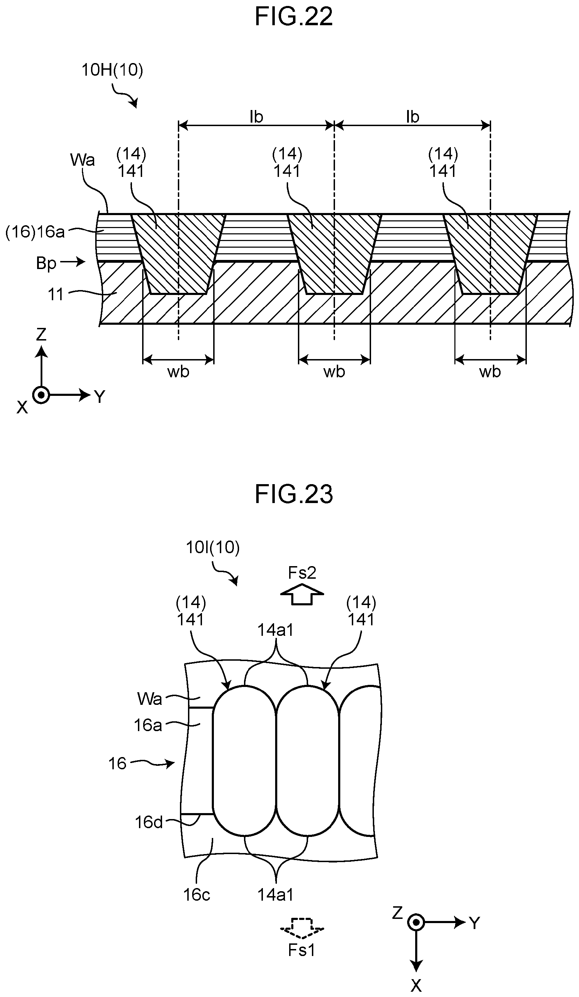

FIG. 22 is a cross-sectional view of the metal joint 10H (10) of FIG. 21. In FIG. 22, Ib corresponds to an interval between the plurality of beads 141 in the direction Y (interval between their centers in the direction Y), and wb is a width of each of the beads 141 at a position Bp at a boundary between a compressed portion 16a of a layered body 16 and a metal material 11. Through diligent research by the inventors, it has been found that if the interval Ib is too narrow, a crack generated at a boundary 16d of one bead 141 may propagate to a boundary 16d of an adjacent bead 141 in the direction Y. From this perspective, the interval Ib is preferably 1.5 times the width wb or longer, and more preferably two times the width wb or longer.

### Seventh Modified Example

FIG. 23 is a plan view of a metal joint 10I (10) of a seventh modified example. As illustrated in FIG. 23, in the seventh modified example, beads 141 adjacent to each other in the direction Y are in contact with each other in the direction Y. However, end portions (boundary portions 14a1) of the beads 141 adjacent to each other in the direction Y, the end portions being in the direction X and the direction opposite to the direction X, are away from each other in the direction Y. Even in a case where a crack is generated at the end portions (boundary portions 14a1) in this configuration, the crack does not propagate to an adjacent bead 141 and specified tensile shear strength against tensile forces Fs1 and Fs2 acting in the direction X and the direction opposite to the direction X may be obtained. Furthermore, in the case of the sixth modified example, because the adjacent beads 141 are in contact with each other, welded portions 14 including the plurality of beads 141 are able to be formed at a higher density, and an effect of enabling a metal joint 10 and a battery 1 to be configured to be smaller while maintaining specified conductance is thus able to be obtained.

### Eighth to Tenth Modified Examples

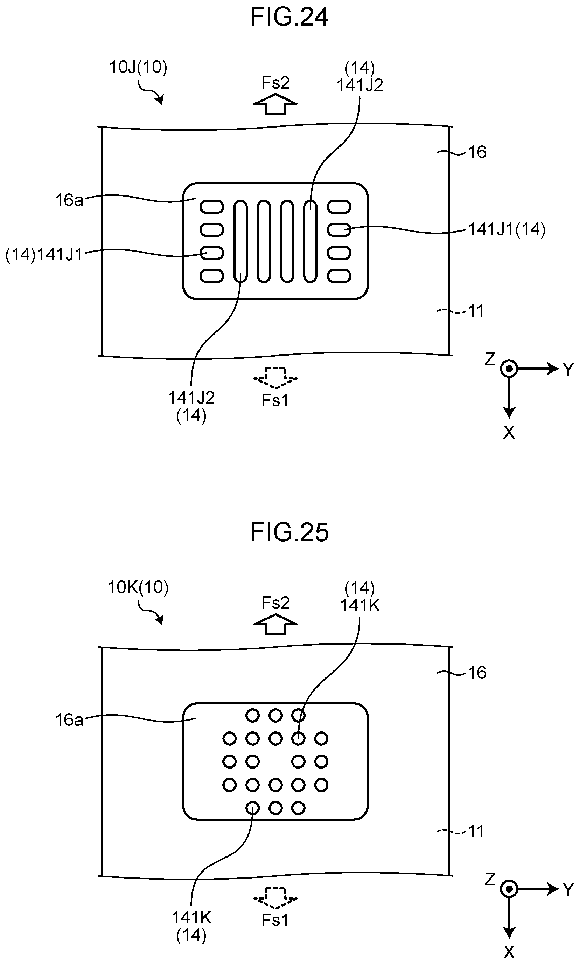

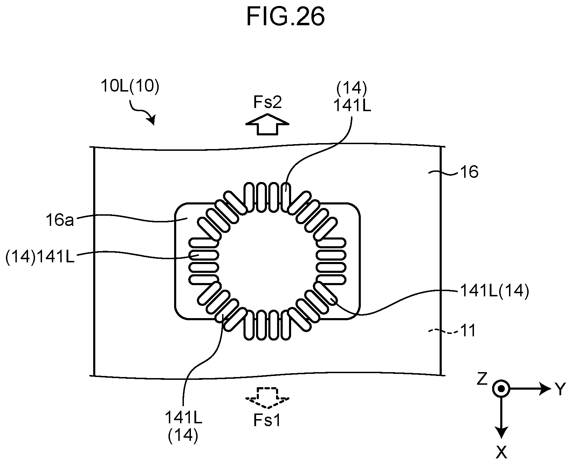

FIG. 24 is a plan view of a metal joint 10J (10) of an eighth modified example, FIG. 25 is a plan view of a metal joint 10K (10) of a ninth modified example, and FIG. 26 is a plan view of a metal joint 10L (10) of a tenth modified example. As illustrated in FIG. 24 to FIG. 26, a metal joint 10 may include a plurality of beads 141 in various forms. For example, in the eighth modified example of FIG. 24 and the tenth modified example of FIG. 26, welded portions 14 include beads 141J1 or 141L extending in a direction intersecting both the direction X and the direction opposite to the direction X in which tensile forces Fs1 and Fs2 act (the direction Y and/or the direction obliquely intersecting both the direction X and the direction Y). Accordingly, even if the beads 141J1 or 141L extend to intersect the directions in which the tensile forces Fs1 and Fs2 act, in a case where the beads 141J1 and 141L are short in length like the beads 141J1 or 141L, and even if a crack is generated, the crack will not propagate a long way to another bead 141. Furthermore, in the ninth modified example of FIG. 25, a boundary portion between each bead 141K and the base material is formed in a curved shape, for example, in a circular or elliptical shape, and is not linear, and cracks are thus difficult to be generated therein. Furthermore, because each bead 141K is short and is away from the other beads 141K, even if a crack is generated, it is difficult for the crack to propagate.

As described above, in the third embodiment and its modified examples, even in a case where the tensile forces Fs1 and Fs2 are acting, it is difficult for cracks to be generated between the beads 141 (welded portions 14) and the base material, and even if a crack is generated, it is difficult for the crack to propagate. That is, the third embodiment and its modified examples enable manufacture of a metal joint 10 higher in tensile shear strength

The beads 141 of the third embodiment and its modified examples may also be applied to the above described first embodiment and second embodiment and their modified examples.

Examples of embodiments of the present invention have been described above, but the embodiments are just examples and are not intended to limit the scope of the invention. The above described embodiments can be implemented in various other modes, and without departing from the spirit of the invention, various omissions, substitutions, combinations, and modifications can be made. Furthermore, they may be implemented by modifying, as appropriate, the specifications of the components and shapes (such as, the structures, types, directions, models, sizes, lengths, widths, thicknesses, heights, numbers, arrangements, positions, and materials), for example.

For example, they may be implemented by variously modifying specifications, such as shapes, numbers, arrangements, and sizes, of the protruded portion and the surface at the end portion of the protruded portion, the end portion being in the protruding direction. For example, the shape of the surface may be of a convex curved surface other than a cylindrical surface and the protruded portion may include a plurality of projections away from one another and each having a convex curved surface.

Furthermore, the beads and the welded portions may be implemented with various specifications, such as numbers, shapes, widths, intervals, and lengths.

Furthermore, in a case where the rigidity of the metal material is sufficient, the metal material may be used as a second member. In this case, a sub-assembly having a metal material and a plurality of metal foils superimposed therein may be conveyed from a compression apparatus (that is, a location where a compressed portion is formed) to a joining apparatus (that is, a location where laser welding is performed).

Furthermore, the joining apparatus does not necessarily perform the irradiation with laser light having two wavelengths, and may perform the irradiation with laser light having a single wavelength. Furthermore, the shape of the spot may be variously modified. Furthermore, scanning of laser light may be implemented by relative movement between the optical head and a workpiece, or a combination of the relative movement and a laser scanner. Furthermore, the laser scanner is not necessarily a galvanometer scanner.

Furthermore, a laser welding method and a laser welding system of the present invention may form, in a workpiece, a welded portion including a plurality of beads extending in a second direction intersecting a sixth direction, the plurality of beads being provided at intervals in a fifth direction intersecting both the sixth direction and second direction, the workpiece including one metal material instead of a plurality of metal foils (layered body), that is, having a first metal material and a second metal material superimposing on each other in the sixth direction, the workpiece having tensile forces acting on the first metal material and the second metal material in directions opposite to each other and along a direction intersecting the sixth direction. In this case also, a metal joint higher in tensile shear strength is able to be obtained.

### Industrial Applicability

The present invention is able to be utilized in laser welding methods, laser welding systems, and metal joints.

### Reference Signs List

1 BATTERY (ELECTRICAL APPLIANCE)
10, 10A TO 10L METAL JOINT
11, 11m, 11p METAL MATERIAL
11a SURFACE
12 METAL FOIL
13m NEGATIVE ELECTRODE MATERIAL
13p POSITIVE ELECTRODE MATERIAL
14 WELDED PORTION
14F FIRST WELDED PORTION (WELDED PORTION)
14R, 14R1, 14R2 SECOND WELDED PORTION (WELDED PORTION)
14a1, 14a2 BOUNDARY PORTION
15 SEPARATOR
16 LAYERED BODY
16a COMPRESSED PORTION
16b END PORTION
16c NON-COMPRESSED PORTION
16d BOUNDARY
16d1, 16d2 BOUNDARY (FIRST BOUNDARY, SECOND BOUNDARY)
20 EXTERIOR MEMBER
20a ACCOMMODATION SPACE
100 JOINING APPARATUS
101 STAGE (SUPPORT MECHANISM)
102 PRESSING MEMBER (SUPPORT MECHANISM)
111, 112 LASER DEVICE
120 OPTICAL HEAD
121, 121-1, 121-2 COLLIMATOR LENS
122 CONDENSER LENS
123 MIRROR
124 FILTER
126 GALVANOMETER SCANNER
126a, 126b MIRROR
131, 132 OPTICAL FIBER
141, 141J1, 141J2, 141K, 141L BEAD
200 COMPRESSION APPARATUS
210 FIRST MEMBER
210a SURFACE
220 SECOND MEMBER
221 PLATE PORTION
221a SURFACE (RESTRICTION PORTION)
222 PROTRUDED PORTION
222a EXTERIOR SURFACE (CONVEX CURVED SURFACE)
1000 LASER WELDING SYSTEM
A2f REGION
Ax ROTATION AXIS
B BOUNDARY
Bp POSITION
C CENTER
CL CENTER LINE
d, d1, d2 DIAMETER
Fs1, Fs2 TENSILE FORCE
Hp PREDETERMINED HEIGHT
Ib INTERVAL
L LASER LIGHT
Lc LENGTH
L1 FIRST LASER LIGHT
L2 SECOND LASER LIGHT
S, S1, S2 SPOT
S11 STEP (FIRST STEP)
S12 STEP
S13 STEP (SECOND STEP)
S131 STEP (THIRD STEP)
S132 STEP (FOURTH STEP)
S1a, S2a OUTER EDGE
SD SCAN DIRECTION
tc THICKNESS
W WORKPIECE
Wa SURFACE
Wb SURFACE
Wc WIDTH
Wp PREDETERMINED WIDTH
wb WIDTH
X DIRECTION (FOURTH DIRECTION, SECOND DIRECTION)
Y DIRECTION (THIRD DIRECTION, FIFTH DIRECTION)
Y1 DIRECTION (WIDTH DIRECTION)
Z DIRECTION (DIRECTION OPPOSITE TO FIRST DIRECTION, DIRECTION OPPOSITE TO PROTRUDING DIRECTION, SIXTH DIRECTION)

## Claims

1. A laser welding method of welding a metal material and a plurality of metal foils together by irradiation with laser light, the laser welding method comprising:
a first step of compressing, in a layering direction, the plurality of metal foils that have been layered; and
a second step of joining the metal material and the plurality of metal foils together by irradiating the plurality of metal foils or the metal material with laser light and forming a welded portion that penetrates the plurality of metal foils in the layering direction and is present within the metal material, wherein
in the first step, a first member and a second member that has a convex curved surface convex toward the first member are brought relatively close to each other, the plurality of metal foils are compressed in a state of being interposed between the first member and the convex curved surface in the layering direction, and a compressed portion curved in a state of protruding in a first direction approximately along the convex curved surface is thereby formed in the plurality of metal foils such that at least a metal foil positioned at an end portion of the compressed portion in the first direction is plastically deformed partially, and
in the second step, a portion of the plurality of metal foils including the compressed portion and the metal material are joined together in a state where the end portion of the compressed portion in the first direction and the metal material are in contact with each other.

2. The laser welding method according to claim 1, wherein in the first step, metal foils adjacent to each other in the layering direction are partially joined with each other in at least either the end portion of the compressed portion in the first direction or an end portion of the compressed portion in a direction opposite to the first direction.

3. The laser welding method according to claim 1, wherein in the first step, each metal foil included in the plurality of metal foils and an adjacent metal foil in the layering direction are partially joined with each other in the compressed portion.

4. The laser welding method according to claim 1, wherein in the first step, the plurality of metal foils are integrated together.

5. The laser welding method according to any one of claims 1 to 4, wherein in the first step, metal foils adjacent to each other in the layering direction at any position in the layering direction are partially joined with each other in the compressed portion by roomtemperature joining.

6. The laser welding method according to any one of claims 1 to 4, wherein the first step and the second step are performed at different locations.

7. The laser welding method according to any one of claims 1 to 4, wherein the second member has a Young's modulus higher than a Young's modulus of the metal material.

8. The laser welding method according to any one of claims 1 to 4, wherein in the first step, the compressed portion is formed to have a thickness in the layering direction, the thickness being 40% or more and 60% or less with respect to a thickness of the plurality of metal foils in the layering direction in a state where the plurality of metal foils have been layered without being compressed.

9. The laser welding method according to any one of claims 1 to 4, wherein the convex curved surface is formed into a columnar surface extending in a third direction approximately orthogonal to a protruding direction of the convex curved surface.

10. The laser welding method according to claim 9, wherein the convex curved surface is formed into a columnar surface having a predetermined width in a fourth direction approximately orthogonal to both the protruding direction and the third direction, the columnar surface extending to be longer in the third direction than the predetermined width.

11. The laser welding method according to claim 10, wherein the convex curved surface is a cylindrical surface.

12. The laser welding method according to claim 11, wherein
the convex curved surface is an outer peripheral surface of a roller that rolls about a rotation axis extending in the third direction, and
in the first step, the plurality of metal foils are compressed while rolling the roller.

13. The laser welding method according to any one of claims 1 to 4, wherein in the first step, a portion of the plurality of metal foils at a different position from the compressed portion is restricted from moving in a direction away from the first member by a restriction portion positioned on an opposite side of the first member with respect to the plurality of metal foils.

14. The laser welding method according to any one of claims 1 to 4, wherein in the second step, the metal material and the plurality of metal foils are held in the layering direction at a position away from the compressed portion by a support mechanism.

15. The laser welding method according to claim 14, wherein in the second step, the support mechanism holds the metal material and the plurality of metal foils in the layering direction in a state where a surface pressure lower than a surface pressure acting on the compressed portion in the first step is acting on the plurality of metal foils.

16. The laser welding method according to any one of claims 1 to 4, wherein in the second step, a surface of a metal foil positioned at an end portion of the plurality of metal foils is irradiated with the laser light, the end portion of the plurality of metal foils being on a side opposite to a side where the metal material is.

17. The laser welding method according to any one of claims 1 to 4, wherein in the second step, the metal material is irradiated with the laser light.

18. The laser welding method according to claim 1, wherein the welded portion includes a plurality of beads extending in a second direction intersecting the layering direction, the plurality of beads being provided at intervals in a fifth direction intersecting both the layering direction and the second direction.

19. The laser welding method according to claim 18, wherein the plurality of beads extending in the second direction are approximately along directions in which tensile forces are the largest among directions intersecting the layering direction, the tensile forces acting on a metal joint by the metal material being pulled in one of directions intersecting the layering direction and the plurality of metal foils being pulled in the other one of the directions intersecting the layering direction, the metal joint having the metal material and the plurality of metal foils joined by the welded portion.

20. The laser welding method according to claim 18 or 19, wherein the plurality of beads are provided to be away from each other in the fifth direction at a boundary between the plurality of metal foils and the metal material in the layering direction.

21. The laser welding method according to claim 20, wherein at the boundary, each of the intervals is 1.5 times a width of each of the beads in the fifth direction or longer.

22. The laser welding method according to claim 18 or 19, wherein the plurality of beads are formed so that end portions of the plurality of beads in the second direction are away from each other in the fifth direction.

23. The laser welding method according to claim 18 or 19, wherein the plurality of beads are provided to extend across the compressed portion and a non-compressed portion in the plurality of metal foils.

24. The laser welding method according to claim 23, wherein
the boundary has a first boundary and a second boundary away from the first boundary in a direction intersecting the layering direction, and
the plurality of beads are provided to extend across the first boundary and the second boundary.

25. The laser welding method according to any one of claims 1 to 4, wherein the metal material and the plurality of metal foils are made of an aluminum-based material.

26. The laser welding method according to any one of claims 1 to 4, wherein the metal material and the plurality of metal foils are made of a copper-based material.

27. The laser welding method according to claim 1, wherein the second step includes:
a third step of forming a first welded portion having the compressed portion and the metal material welded together by irradiation with the laser light; and
a fourth step of melting and solidifying, by irradiation with the laser light, either a portion adjacent to a gap between the first welded portion and the metal foils or a connection between the first welded portion and the metal foils, after the third step.

28. The laser welding method according to claim 27,
wherein in the fourth step, the laser light includes first laser light and second laser light shorter in wavelength than the first laser light.

29. The laser welding method according to claim 27, wherein in the fourth step, the irradiation with the laser light includes a plurality of irradiation instances to melt and solidify different portions respectively.

30. The laser welding method according to claim 27, wherein in the fourth step, the irradiation with the laser light includes a plurality of irradiation instances to melt and solidify portions of the metal foils at different positions in the layering direction respectively.

31. The laser welding method according to claim 27, wherein in the fourth step, the irradiation with the laser light includes a plurality of irradiation instances in which different positions on the metal foils are irradiated with the laser light.

32. The laser welding method according to claim 27, wherein in the fourth step, the irradiation with the laser light includes a plurality of irradiation instances at different power levels of the laser light.

33. The laser welding method according to claim 27, wherein an amount of energy per irradiation instance with the laser light in the fourth step is less than an amount of energy of the laser light used in irradiation in the third step.

34. The laser welding method according to claim 27,
wherein in the fourth step, the laser light is scanned over the metal foils.

35. The laser welding method according to claim 34, wherein
in the third step, the laser light is scanned over the metal foils, and
the fourth step includes scanning the laser light at a scanning speed faster than a scanning speed of the laser light in the third step.

36. The laser welding method according to claim 27, wherein in the fourth step, laser light is irradiated in a direction inclined with respect to an irradiation direction of the laser light in the third step.

37. A laser welding method comprising irradiating one metal material of a first metal material and a second metal material superimposing on each other in a sixth direction with laser light, forming a welded portion that penetrates the one metal material in the sixth direction and is present within the other metal material of the first metal material and the second metal material, and thereby joining the first metal material and the second metal material together, wherein
the welded portion includes a plurality of beads extending in a second direction intersecting the sixth direction, the plurality of beads being provided at intervals in a fifth direction intersecting both the sixth direction and the second direction, and
the plurality of beads extending in the second direction are approximately along directions in which tensile forces are the largest among directions intersecting the sixth direction, the tensile forces acting on a metal joint by the first metal material being pulled in one of the directions intersecting the sixth direction and the second metal material being pulled in the other one of the directions intersecting the sixth direction, the metal joint having the first metal material and the second metal material joined by the welded portion.

38. A laser welding system to weld a metal material and a plurality of metal foils together by irradiation with laser light, the laser welding system comprising:
a compression apparatus configured to compress, in a layering direction, the plurality of metal foils that have been layered; and
a joining apparatus configured to join the metal material and the plurality of metal foils together by irradiating the plurality of metal foils or the metal material with laser light and forming a welded portion that penetrates the plurality of metal foils in the layering direction and is present within the metal material, wherein
the compression apparatus is configured to: brings a first member and a second member that has a convex curved surface convex toward the first member relatively close to each other; compress the plurality of metal foils in a state where the plurality of metal foils are interposed between the first member and the convex curved surface in the layering direction; and thereby form, in the plurality of metal foils, a compressed portion that is curved in a state of protruding in a first direction along the convex curved surface, such that at least a metal foil positioned at an end portion of the compressed portion in the first direction is plastically deformed partially, and
the joining apparatus is configured to join the plurality of metal foils and the metal material together in a state where the end portion of the compressed portion in the first direction and the metal material are in contact with each other.

39. The laser welding system according to claim 38, wherein the welded portion includes a plurality of beads extending in a second direction intersecting the layering direction, the plurality of beads being provided at intervals in a fifth direction intersecting both the layering direction and the second direction.

40. A metal joint, comprising:
a plurality of metal foils that have been layered;
a metal material in contact with a metal foil positioned at one end of the plurality of metal foils in a layering direction; and
a welded portion that penetrates the plurality of metal foils in the layering direction, is present within the metal material, and joins the plurality of metal foils and the metal material together, wherein
the plurality of metal foils include a compressed portion that has been compressed in a state of being curved to be convex toward the metal material, and
at least the metal foil in contact with the metal material is plastically deformed partially in the compressed portion.

41. The metal joint according to claim 40, wherein the welded portion includes a plurality of beads extending in a second direction intersecting the layering direction, the plurality of beads being provided at intervals in a fifth direction intersecting both the layering direction and the second direction.
